(19) Europäisches Patentamt / European Patent Office / Office européen des brevets

(11) **EP 2 538 741 B1**

(12) **EUROPEAN PATENT SPECIFICATION**

(45) Date of publication and mention
of the grant of the patent:
**30.04.2014 Bulletin 2014/18**

(51) Int Cl.:
**H04W 72/08** (2009.01)

(21) Application number: **11171026.5**

(22) Date of filing: **22.06.2011**

(54) **Interference coordination between base stations**

Koordination von Interferenzen zwischen Basisstationen

Coordination des interférences entre des stations de base

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.12.2012 Bulletin 2012/52**

(73) Proprietor: **NTT DoCoMo, Inc.
Chiyoda-ku
Tokyo 100-6150 (JP)**

(72) Inventors:
• **Uygungelen, Serkan
81549 Munich (DE)**
• **Auer, Gunther
80339 Munich (DE)**

(74) Representative: **Zinkler, Franz et al
Patentanwälte Schoppe, Zimmermann, Stöckeler
Zinkler & Partner
Postfach 246
82043 Pullach (DE)**

(56) References cited:
**EP-A1- 2 180 739          EP-A1- 2 265 072
WO-A1-2011/041981**

• **SAMSUNG: "Flexible Fractional Frequency
Reuse Approach", 3GPP DRAFT; R1-051341, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Seoul,
Korea; 20051101, 1 November 2005 (2005-11-01),
XP050100938, [retrieved on 2005-11-01]**

**Description**

The present invention is related to wireless transmission and, particularly, to wireless transmission between one or more base stations and user equipment such as mobile phones or other wireless terminals associated with these base stations.

Low-power small range BSs such as femto BSs are one of the important element of heterogeneous networks which promise high system performance in terms of capacity and coverage. However, because of its uncoordinated deployment, dynamic interference mitigation between such BSs becomes crucial in order to provide desired quality of service. The proposed method improves the cell edge capacity performance according to the dynamic interference environment of a BS in multi-user network deployments. With the proposed method, resources can be assigned to BSs in a full autonomous way. For the networks where BSs are controlled centrally, resources assignment can also be done by the combination of central and autonomous approaches.

A significant fraction of users served by a cellular network are located indoors; yet conventional macro-cellular networks may fail to deliver broadband experience to indoor users, due to severe wall penetration losses. Low-power bs such as femto BSs are one solution to this problem: wall penetration losses are largely mitigated, while the spatial reuse of radio resources is tremendously boosted, due to the small cell sizes 1-3]. However, such BSs are mostly deployed by end users locally without a coordination between each other. Unlike macrocell networks, in uncoordinated local area deployments, the operator cannot determine the locations of the neighboring BSs a priori. This causes an high interference between bs (co-channel interference) especially in networks where bs are densely deployed, such as within enterprises or residential complexes.

A frequency reuse technique, where interfering neighbors transmit data on different frequency resources (subbands), is widely used in local area networks to enhance the throughput of cell edge users. Access to the remaining subbands is restricted, so as not to interfere with neighboring bs. Thus, UEs located in the vicinity of two or more bs face less interference and enjoy better service quality. On the other hand, the trade-off of the frequency reuse is the decrease in the network's overall resource efficiency. Consequently, in order to increase the resource usage efficiency, BSs should use as many subbands as possible.

The vast variations of the interference conditions experienced by bs indicates the necessity of the dynamic frequency reuse approaches which aim at adopting the subband allocation to the observed interference conditions. In a distributed (autonomous) approach, each BS carries out the subband allocation on its own. In [4-8], distributed frequency reuse methods are studied, where each bs may access a predefined number of subbands, so they offer no leeway in subband number when interference conditions change. [9-11] propose a subband selection method depending on the interference environment of the BSs. However, these methods could cause an excessive signaling between BSs. In a centralized approach, subbands are assigned to bs by means of a central controller, which generally achieves more efficient resource utilization, at the expense of higher complexity at the central controller. Also, this approach needs an extra signaling between the controller and the BSs. In [12], a central entity assigns subbands according to the traffic demands of each bs, instead of the prevailing interference conditions. Therefore, under high traffic load situations where all bs require large bandwidth, this method may fail to assign sufficient resources to cell edge users. In [13-17] central resource assignment is applied based on graph theory which maps the interference conditions onto a graph (interference graph). In [13-15] resource utilization is not addressed; each UE (or BS as in [15]) is allocated same amount of resources independent of its interference environment. On the other hand, in [16] optimization in resource allocation is introduced but only applicable for macrocell networks. In [17], dynamic frequency reuse with high resource efficiency in random deployments is addressed. However, its efficiency decreases in multi-user deployments.

WO 2011/041982 AI discloses a system and method for inter-cell interference coordination. A method for controller operation includes receiving interferer information from a device served by the controller, scheduling a cell edge device based on the received interferer information, and reporting usage information of the subset of resources to neighboring controllers. The cell edge device operates in a periphery of the coverage area of the controller, and the cell edge device is scheduled to a subset of resources. The method also includes from each neighboring controller, receiving neighboring usage information of a neighboring subset of resources reserved for cell edge devices served by the neighboring controller. The method further includes scheduling a cell center device based on the received usage information from the neighboring controllers, and transmitting to scheduled devices over their respective scheduled resources. Cell center devices is scheduled to resources not in the subset of resources.

It is an object of the present invention to provide an improved concept of operating within a base station.

This object is achieved by a base station of claim 1, a method for operating a base station of claim 13 or a computer program of claim 14.

The present invention is based on the finding that, in order to achieve a high cell edge capacity, specific attention has to be paid to the allocation of the secondary transmission resources. Particularly, in order to perform a useful secondary transmission resource allocation, a receiver receives, from a first one of a plurality of user equipment, one or more identification of further base stations interfering with the first user equipment in a transmission resource of a plurality of transmission resources. Hence, all user equipments associated with the base station under consideration report the identifications of other base stations which provide interference to the user equipment associated with the base station under consideration.

Furthermore, the base station is configured for receiving, from one or more further base stations, a primary resource indicator indicating the primary transmission resource for the further base station, in which a further user equipment assigned to the further base station would suffer an interference from the base station under consideration. Stated differently, the base station under consideration receives the primary resource indicator from a different base station, where this different base station has been informed by the base station under consideration due to the transmission of identification of the other user equipment on the base station under consideration to the other base station.

The transmission resource allocator as included in the base station under consideration allocates a secondary transmission resource to the second user equipment from the set of available transmission resources, wherein the set of available transmission resources does not include the primary transmission resource indicated by the primary resource indicator. Stated differently, the transmission resource allocator makes sure that in the primary transmission resource of an neighboring base station, the base station under consideration does not transmit any information so that the user equipment in the neighboring base station is not interfered with by the transmission of the base station under consideration. The other transmission resources, i.e., the transmission resources not indicated by the primary transmission resource are free to be allocated to end user equipment associated with the base station under consideration or "served" by the base station under consideration in order to enhance the capacity of the mobile network.

In a further embodiment, the base station under consideration not only receives identification information on interfering base stations from the user equipment but also receives SINR measurements of the subbands from the user equipment served by the base station. Hence, the reception information received by the base station under consideration preferably comprises the identification information on interfering base stations and SINR information of subbands from the user equipment and primary subband indicator information from serving base stations of victim user equipment.

The output information provided by the base station in accordance with the present invention preferably comprises instructions to allocate resources to user equipment on the one hand and a primary subband indicator to interfering base stations on the other hand. The primary subband selection, i.e., the association of the transmission resources which are then signaled to neighboring base stations via the primary subband indicator can be performed in an autonomous way or, alternatively, in a centrally-controlled non-autonomous way.

Subsequently, preferred embodiments of the present invention are discussed in the context of the accompanying drawings in which:

Fig. 1          is a block diagram for illustrating a base station in accordance with an embodiment of the present invention;

Fig. 2          illustrates a mobile network consisting of several base stations and user equipment;

Figs. 3a to 3c  illustrates a scenario in which the advantage of the present invention is visible;

Fig. 4          illustrates a transmission resource assignment for multi-user deployments;

Fig. 5          illustrates the scenario of Fig. 4 in the context of the measurements done by the user equipment;

Fig. 6a         illustrates a preferred embodiment of the primary and secondary subband assignment process done autonomously;

Fig. 6b         illustrates an overview of a subband assignment process in an embodiment done partly by the base station where the primary subbands are assigned by a central controller;

Fig. 7a         illustrates an example of the present invention at time zero;

Fig. 7b         illustrates an example of the present invention within a time slot-one;

Fig. 7c         illustrates a transmission resource assignment at the base station at the end of time slot-one;

Fig. 7d         illustrates the situation of the example within a time slot-two;

Fig. 7e         illustrates a transmission resource assignment at the base station at the end of time slot-two/at the beginning of time slot-three;

Fig. 7f       illustrates the example within time slot-three;

Fig. 8a       illustrates the mean cell capacity of the inventive procedure compared to other procedures;

Fig. 8b       illustrates the percentage of assigned recourses and of collisions over a number of time slots in order to show the high convergence of the preferred process;

Fig. 8c       illustrates a CDF of the SINR for different procedures;

Fig. 8d       illustrates the CDF of the user capacity for several implementations;

Fig. 9a       illustrates an embodiment for calculating a transmission resource availability;

Fig. 9b       illustrates an embodiment for performing the secondary assignment procedure;

Fig. 9c       illustrates an embodiment for performing the primary assignment in an autonomous way; and

Fig. 10       illustrates a further embodiment for performing the secondary transmission resource assignment.

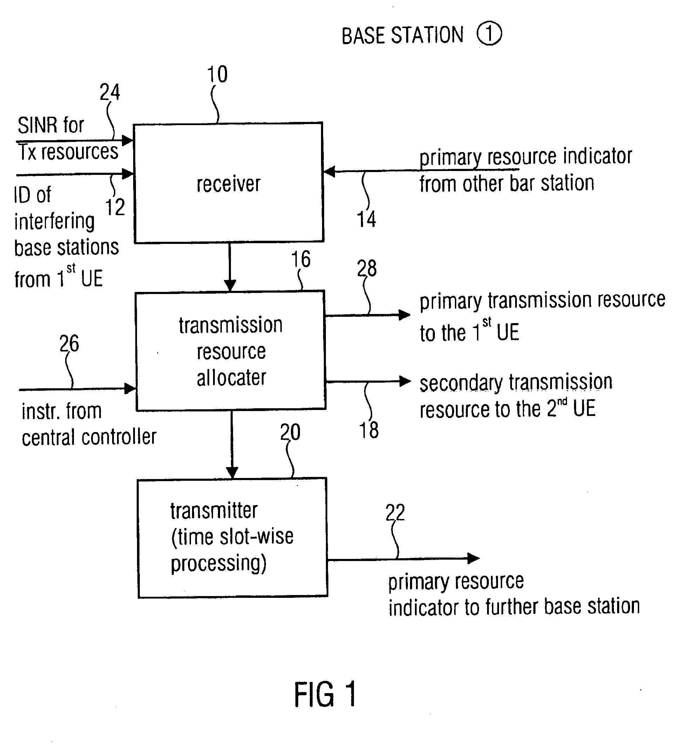

Fig. 1 illustrates a preferred embodiment of a base station for communicating with a plurality of user equipments assigned to the base station. The base station comprises a receiver 10 for receiving, from a first one of a plurality of user equipment, one or more identifications 12 of further base stations interfering with the first user equipment in a transmission resource of a plurality of transmission resources. When there are additional user equipments served by the base station, then, this base station also receives one or more identifications of further base stations interfering with this second user equipment in a transmission resource of a plurality of transmission resources. The receiver is additionally configured for receiving, from a further base station, a primary resource indicator 14 indicating the primary transmission resource for the further base station, in which a further user equipment assigned to the further base station would suffer an interference from the base station, i.e., the base station under consideration illustrated in Fig. 1. The base station furthermore comprises a transmission resource allocator 16 for allocating a secondary transmission resource to the second user equipment from the set of available transmission resources, wherein the set of available transmission resources does not include the primary transmission resource indicated by the primary resource indicator 14.

The transmission resource allocator 16 is configured for allocating a primary transmission resource to the first user equipment as indicated by 18, wherein the primary transmission resource is different from the primary transmission resource indicated by the primary transmission resource indicator 14. Furthermore, the base station comprises a transmitter 20 for transmitting a primary transmission resource indicator 22 to a further base station, wherein the further base station is a base station causing an interference in the primary transmission resource at the first user equipment as determined by the one or more identifications 12 received by the receiver 10 from the first user equipment.

In a further embodiment, the receiver 10 is configured for receiving reception quality information 24 for a plurality of different transmission resources from the second user equipment. Furthermore, the transmission resource allocator 16 is configured to only allocate a secondary transmission resource to the second user equipment, for which the receiver 10 has received, from the second user equipment, a reception quality information indicating a reception quality above a predetermined reception quality threshold.

As illustrated in block 20 of Fig. 1, the transmitter performs a time slot-wise processing and the same is true for the receiver 10 and the transmission resource allocator 16. Hence, the receiver 10 is configured to receive the one or more identifications and a reception quality information (12, 24) in a first time slot, and the transmission resource allocator 16 is configured to allocate, based on the information received by the receiver 10, in a second time slot being later in time than the first time slot. Preferably, the second time slot is adjacent to the first time slot in time, but can also be a time slot which is not adjacent but is, for example, the second to next or third to next time slot. Furthermore, the receiver 10 is configured to receive the one or more identifications and the reception quality information 12, 24 in a first time slot, and the transmitter 20 is configured for transmitting the primary resource indicator 22 in a second time slot being later in time than the first time slot.

Hence, the receiver receives, in an embodiment, IDs from all user equipments served by the base station having the receiver, and, after allocation, the user equipments being allocated with the primary resources is treated such that the base stations interfering with this user equipment are provided with the primary resource indicator. The user equipments, however, that are allocated with a secondary transmission resource is not considered when the primary resource indicators are generated and sent. Therefore, the user equipment having a secondary transmission resource reports the IDs of interfering base stations, but these interfering base stations do not receive a primary resource indicator.

As outlined later on, the transmission resource allocator 16 is configured to calculate an availability measure for each of the plurality of transmission resources based on individual reception quality information received from the user equipment served by the base station and to the transmission resource allocator 16 is configured to allocate the secondary transmission resource based on the availability measure for the specific transmission resource.

In a further embodiment, the transmission resource allocator 16 is configured to allocate the secondary transmission resource only to user equipment, for which a reception quality measure provided by the user equipment is above a predetermined reception quality measure threshold.

In a further embodiment, the transmission resource allocator 16 is additionally configured to perform a primary transmission resource allocation as well. This primary transmission resource allocation can be performed in a de-centralized autonomous way by the base station, but can also be performed in a centrally controlled way. In the latter case, the transmission resource allocator 16 is configured for receiving instructions 26 from a central controller so that the base station allocates the primary transmission resource 28 to a user equipment served by the base station in accordance with these instructions 26. On the other hand, the secondary transmission resource allocation indicated by 18 in Fig. 1 is performed by the transmission resource allocator 16 of the base station in a de-centralized distributed way.

In the embodiment, in which the transmission resource allocator 16 performs a primary transmission resource allocation 28 in a de-centralized way, the transmission resource allocator 16 is configured to perform the distributed procedure for the allocation of the primary transmission resource by only allocating a primary transmission resource not blocked by a primary transmission resource indicator 14 from a further base station as received by the receiver 10, and by selecting a transmission resource having an availability measure being higher than a minimum availability measure of the allocatable transmission resources.

Furthermore, the transmission resource allocator 16 is configured for re-allocating a primary transmission resource for a later time slot in case of receiving a primary resource indicator 14 for the allocated primary transmission resource, and wherein the at least one secondary transmission resource 18 allocated in an earlier time slot is available for being selected as a primary transmission resource 28 for the later time slot.

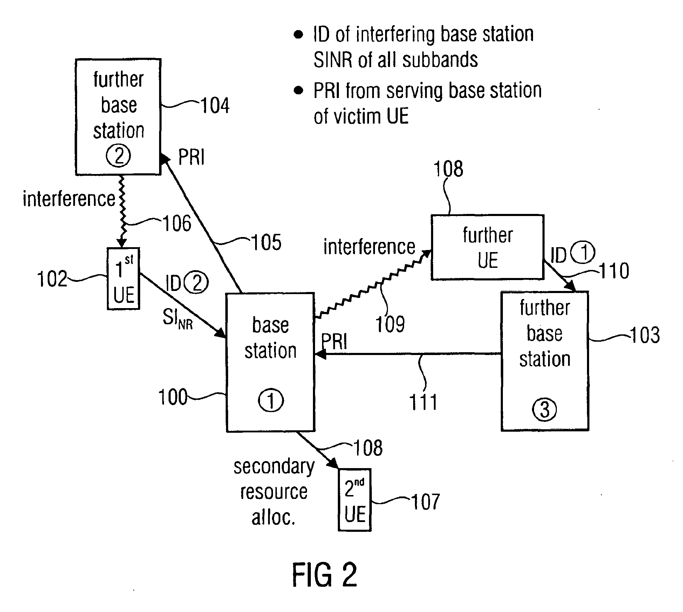

Fig. 2 illustrates a scenario, in which the base station of Fig. 1 is located. Particularly, the base station of Fig. 1 is illustrated at base station 1 at 100 in Fig. 2. The further base station, from which the base station 100 receives the primary resource indicator PRI is indicated as further base station 3 or 103 in Fig. 2. Furthermore, the first one of the plurality of user equipment, from which the receiver of the base station 100 receives one or more identifications is indicated at 102. The "further base station" which is indicated to the base station 100 by the first user equipment 102 is indicated in Fig. 2 as the further base station 2 or 104. The primary transmission resource which the base station 100 assigns to the first user equipment 102 is signaled from the base station 100 to the further base station 104 via the primary resource indicator 105, since the further base station 104 results in an interference 106 at the first user equipment, where the first user equipment 102 is served by the base station 100. The other user equipment additionally served by the base station 100 is the second user equipment 107 that receives the secondary transmission resource signaled by the secondary resource allocation 108. The further base station 103 serves a further user equipment 108 and the first user equipment 108 receives interference by the base station 100 as illustrated at 109. Due to this, the further user equipment 108 provides the identification of the base station 100 to the further base station 103 as illustrated at 110. Due to this, the further base station 103 sends the primary resource indicator 111 to the base station 100.

Embodiments of the present invention address a distributed dynamic resource partitioning in wireless networks. The main objective is to protect user equipment (UEs) that are located near the cell boundary of two or more base stations (BSs) from detrimental downlink interference without causing a degradation in overall system performance. For this purpose, the present invention relates to a novel distributed dynamic frequency reuse (D-DFR) method. The method and the corresponding apparatus are advantageous in that they strike a balance between interference protection and spatial reuse of available resources and the present invention, i.e., the base station, the method of operating a base station and the corresponding computer program are well suited for randomly deployed wireless networks but can also be used for other non-randomly or semi-randomly deployed wireless networks.

In order to achieve an high cell edge capacity, a novel D-DFR method is developed. The main objective of D-DFR is to dynamically assign subbands to bs, so as to improve the capacity of cell-edge UEs, without causing a sharp decrease in the overall network capacity. Instead of frequency resources, any other resources such as time, code, etc., can also be assigned to BSs with D-DFR for the same purpose. In this report, the focus will be on the assignment of subbands.

In D-DFR, each BS collects feedback from its UEs and the neighboring BSs. Based on these feedback, primary and secondary subbands are assigned for each BS. Primary subbands cannot be used by interfering neighbors. Thus, the UE to which a primary subband is allocated, faces low interference and enjoys higher capacities. For the sake of high resource utilization, in addition to the primary subband, the BS can use secondary subbands, depending on its interference conditions; however these subbands cannot be blocked at interfering neighboring BSs. Hence, the D-DFR offers the BS a greedy resource allocation limited by its interference environment.

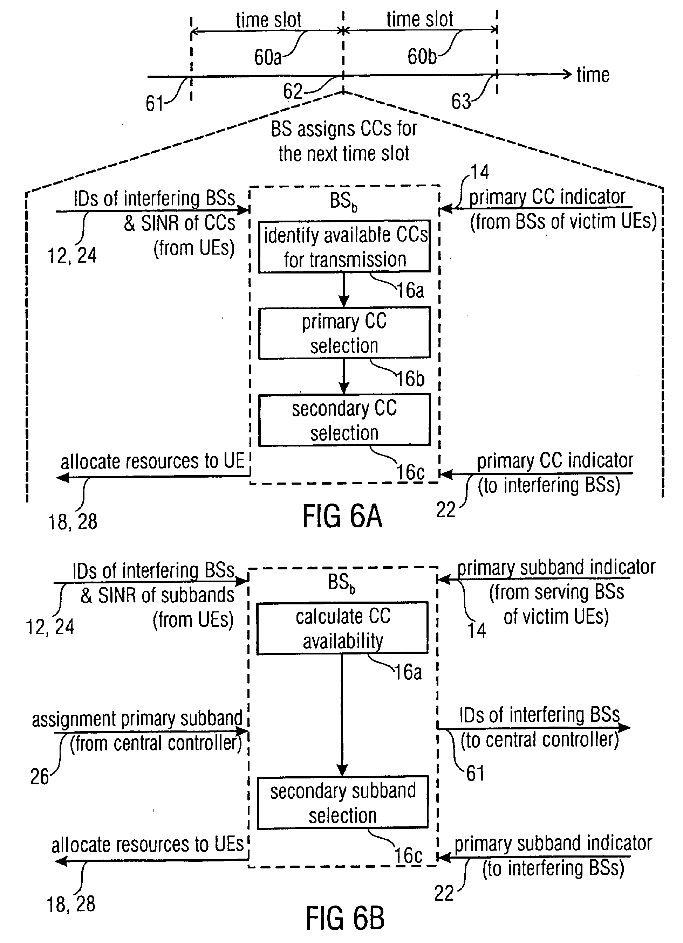

The D-DFR is an iterative algorithm where the subbands assigned to the BSs are updated for the next time slot according to the feedback of the previous time slot. Fig. 6a shows an overview of the actions taken by a given BS, BS[b], for the networks without any central controller. During a time slot, of which duration is same for all UEs and BSs, a UE identifies the cell identities (IDs) of the interfering BSs and also measures the signal-to-interference-and-noise ratio (SINR) levels over each subband. Additionally, the serving BSs of the victim UEs, which face high interference from BS[b], inform BS[b] about the primary subbands assigned by them. Upon receiving these feedback at the end of a time slot, BS[b] assigns primary and secondary subbands that will be used during the next time slot.

Particularly, Fig. 6a illustrates an overview of the primary and secondary subband assignment process done autonomously by the base station under consideration. Here, victim UEs, such as user equipment 108 of Fig. 2, is the user equipment facing high interference from the base station under consideration. The interfering base station such as 104, on the other hand, is a base station which causes high interference (106 in Fig. 2) to the user equipment such as 102 in Fig. 2 served by the base station under consideration, i.e., base station 100.

Particularly, Fig. 6a additionally illustrates the time-slot wise processing. Illustrated is a first time slot 60a and a second time slot 60b, where the second time slot 60b is later in time than the first time slot 60a and is, particularly, adjacent in time to the first time slot 60a.

Particularly, Fig. 6a further illustrates the functionality of the transmission resource allocator 16. Steps performed by the transmission resource allocator 16 in the Fig. 6a embodiment are an identification 16a of available transmission resources or (component carriers equal to CCs) for transmission. Then, in this embodiment, a primary component carrier or transmission resource selection is performed as illustrated at 16b and in this embodiment a secondary component carrier selection is performed at 16c. The input into the process are the IDs of interfering base stations 12 and the signal to interference and noise ratios (SINRs) of the transmission resources (CCs) from the user equipment illustrated at 24 in Fig. 1 is an additional input, but not from user equipment but from base stations of victim user equipment is a primary resource indicator 14. The output of the procedure performed by the transmission resource allocator is the allocation of resources to user equipment 18, 28 and the transmission of a primary resource indicator 22 to interfering base stations.

Fig. 6b illustrates an overview of the subband assignment process done partly by the base station under consideration, i.e., base station 100 in Fig. 2. Primary subbands are assigned to base stations by a central controller as indicated by item 26 in Fig. 1 based on the feedback from base stations. Secondary subbands, however, are assigned autonomously by the base station under consideration as outlined by 16c in Fig. 6b.

Fig. 6b illustrates the subband assignment at $BS_b$ for centrally controlled networks. In such cases, primary subbands are assigned to BSs by the central controller depending on the feedback sent from BSs. Secondary subbands, on the other hand, are assigned by BSs autonomously depending on the feedback from UEs and neighboring BS. Since the interfering environment of a BS does not change as frequently as UEs, the central controller does not need to update the primary subband assignment at each time slot. This way, signaling overhead decreases.

In order to inform the central controller on the current situation for the base station under consideration, i.e., $BS_b$, the transmission resource allocator is configured to forward, to the transmitter 20 of Fig. 1, the identifications of the interfering base stations which are transmitting to a central controller as illustrated at 61.

The present invention provides, in different embodiments, a plurality of advantages.

Each BS has a primary subband which is not used by its interfering neighbors. By allocating this subband to cell-edge UEs will increase the cell edge capacity, thus improves the fairness between the cell edge and cell center UEs.

- Dynamic resource assignment Primary and secondary subbands are updated based on the actual measurements done by UEs.
- Flexibility The number of assigned subbands depends on the interference conditions of each bs. bs facing low interference can use more subbands which increases the resource utilization.
- Less complexity Proposed method has modest signaling overhead and low complexity.
- Fast convergence By the wise selection of the subbands at the BSs, the network reaches a stable resource allocation in a short time.
- Both applicable to distributed and central approaches With D-DFR, subband assignment can be done in an autonomous way without need of a central controller. However, for the networks controlled by centrally, primary subbands can be assigned to BSs by a central controller. This makes the proposed method suitable for any kind of network deployments.
- High resource utilization for multi-user deployments Each user in the same cell experiences different interference conditions, hence, it is possible to allocate different subbands to different UEs according to interference they face. In addition to primary subband, with the allocation of secondary subbands, more subbands can be allocated to cell center UEs facing less interference. This increases the resoruce efficiency of the network.

Subsequently, the system model underlying the following considerations is discussed in more detail.

A downlink transmission in a wireless network based on 3GPP Long Term Evolution-Advanced (LTE-A) is considered. LTE-A is an evolved version of LTE with higher system performance targets [18]. Also, LTE-A is supposed to be backward compatible with LTE which means an LTE-A network should support an LTE UE. One of the important requirement for LTE-A is to support transmission bandwidth up to 100 MHz. Nevertheless, in LTE, maximum supported bandwidth is 20 MHz [19]. In order to achieve a high system bandwidth, carrier aggregation (CA) method is developed [20,21]. In CA, multiple blocks of LTE bandwidths, named as component carriers (CC), are combined to obtain a wider bandwidth. As each CC is compatible with LTE, both LTE and LTE-A UEs can be supported by an LTE-A network. As the bandwidth of LTE-A is composed of multiple CCs, each CC can be assumed as a subband where a BS transmits data over one or more subbands. For the rest of the report, subband and CC will be used interchangeably. It is worth to mention that a CC consists of resource blocks (RBs) which is the minimum resource unit that can be allocated to a UE. A BS can allocate RBs of the same CC to UEs as long as each RB is allocated to only one UE in the same cell.

In the network, the BSs and UEs are assumed to be synchronized with each other. Each BS receives feedback of a previous time slot and makes decisions for the next time slot. During each time slot, the subbands used by BSs do not change. Changes in subband assignment are only done between time slots.

When, for example, Fig. 6a and the time slot 60a, 60b are considered, it is to be noted that, in an embodiment, the feedback from $t_{n-1}$ is received at time 61. Then, at time 61, the subband assignment for $t_n$, i.e., for time slot 60a is performed. Then, at time 62, the feedback from time slot 60a is received and, at time 62, the subband assignment for the next time slot 60b is performed. Then, at time 63, the feedback from time slot 60b is received and the subband or component carrier assignment for the next time slot is performed.

Subsequently, the measurements done by the user equipment are discussed in more detail.

1) IDs of Interfering BSs: Owing to an uncoordinated deployment of BSs, it is impossible to know a priori the neighbors of a BS. Therefore, each UE discovers its interfering neighbors during operation. In D-DFR, each UE identifies its interfering BSs based on a pre-defined SINR threshold, $\gamma_{th}$, which specifies the minimum desired SINR for each UE. In LTE-A, for each subband, UEs can distinguish the received signal strengths from different BSs with the help of BS-specific reference signals. The received signal strength observed by $UE_m$ from $BS_b$ is determined by

$$R_{m,b} = T_b G_{m,b} \qquad\qquad (1)$$

where $T_b$ is the BS transmit power and $G_{m,b}$ is the channel gain between $BS_b$ and $UE_m$. This describes the combined effect of path loss and shadowing. The effect of fast fading is negligible since the measurement interval is long enough based on the UE's speed.

By knowing the received signal strength from all neighboring BSs, a UE can calculate the worst-case SINR by taking into account the interference from all neighboring BSs. Based on the received signal strengths from the serving $BS_b$, and from the set of all interfering BSs, $I_m$ a $UE_m$ experiences a worst case SINR of $\gamma_{th}$. If $\gamma < \gamma th$, then among $I_m$, the largest interfering BS is removed and $\gamma_m$ is recalculated. This process continues until

$$\gamma_m = \frac{R_{m,b}}{\sum_{i \in \overline{I}_m} R_{m,i} + \eta} \geq \gamma_{th} \qquad (2)$$

where $\eta$ accounts for thermal noise and $\overline{I}_m$ is the set of tolerable interfering neighbors defined by:

$$\overline{I}_m = I_m - I_{m,\mathrm{rem}} \qquad (3)$$

where $I_{m,rem}$ is the set of removed interfering BSs, which must not use the same subband that is allocated to $UE_m$, so that it may achieve $\gamma_{th}$. All UEs report their interfering neighbors to their serving BSs when a change (such as the entrance of a BS in the network) is detected. When a BS allocates a primary subband $p$ to UE, it informs the (potential) interfering BSs of $UE_m$ via a primary subband indicator to prevent those interfering BSs from using $p$. Thus, the desired $\gamma_{th}$ can be achieved for the $UE_m$. If a BS serves multiple UEs, then it should perform the same process for all UEs since each UE has distinct interfering BSs depending on its location.

As a final remark, increasing $\gamma_{th}$ increases the number of the interfering BSs of a UE. This way, higher SINRs are achieved, but this is a traded-off with a reduced spatial reuse of subbands.

2) SINR Levels of Subbands: As stated above, a UE measures the received signal strengths from the serving BS and neighboring BSs over each subband. Therefore, it is possible for a UE to calculate the SINR levels of each subband. With SINR information over each subband, a BS identifies available subbands to allocate UEs for the next time slot. Subsequently, the availability of a subband is discussed.

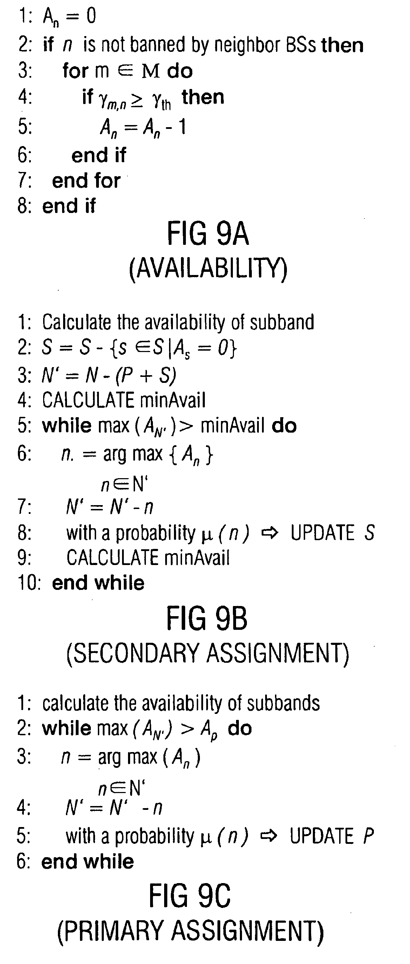

In order to assign subbands autonomously, a BS needs a metric to compare the subbands. This way, it can select the most efficient ones in terms of desired performance criterion. For this purpose, a metric 'subband availability' is developed. The availability of a subband n, $A_n$, indicates how many UEs in a cell experiences an SINR higher than $\gamma_{th}$ over n. However, if a given BS receives a primary subband indicator from its neighbor(s), the given BS cannot use the subband implied by the primary subband indicator in order to sustain the desired $\gamma_{th}$ for the victim cell edge UEs. Therefore, the availability of indicated subband (banned subband) becomes 0 independent of SINR levels reported by UEs. Calculation of the availability of a subband n is given in the pseudo code of Fig. 9a.

M is the set of UEs of interest and $\gamma_{m,n}$ is the SINR level experienced by $UE_m$ over n. If n is planned to be assigned as a secondary subband, all UEs in the cell constitute M . However, if it is planned to be assigned as a primary subband, then either all UEs or subset of UEs constitutes M . The selection of set of UEs to calculate a primary subband is explained in a detailed way in the following.

It is preferred to use a probability model within the subband assignment. Since the subband assignment at BSs are done in a distributed way according to the feedback of previous time slot, it is possible for a BS to make wrong decisions that cause a high interference on UEs. As the BSs learn their environment, the network reaches a stable point and the BSs do not need to change their subband assignments. However, it is desirable for a network to reach the stable point as fast as possible. Change in the subband assignment of a BS forces to change its neighbors' subband selection, hence increases the time to reach a stable point in the network. For instance, assume $BS_A$ and $BS_B$ which interfere each other. They allocate subband n to their UEs for the time slot $t_f$. Then, during the time slot $t_f$, UEs served by $BS_A$ and $BS_B$ face high interference. Therefore, for the next time slot, $t_{f+1}$, both $BS_A$ and $BS_B$ give up using n. However, during $t_{f+1}$, UEs measure low interference over n since both BSs do not use it. As a result, both $BS_A$ and $BS_B$ allocate n or the time slot $t_{f+2}$. This process continues until one of the BSs does not use n when other one decides to use it. For this purpose, in D-DFR, a BS can use a new subband that is not used during the previous time slot with a probability depending on its availability. By introducing a probability in the subband assignment, interfering BSs are prevented to use the same subband simultaneously. This way, the interference in the network decreases and the subband selection at BSs becomes stable in a shorter time. The probability of assigning the subband n is calculated as:

$$\mu(n) = \begin{cases} 0.5 & \text{if } |M| = 1 \\ 1 - \left(\dfrac{|M|-1}{|M|}\right)^{A_n} & \text{if } |M| > 1 \end{cases} \qquad (4)$$

where $A_n$ is the availability of n, M is the set of the UEs used for calculating the n's availability and the operator $|.|$ indicates the cardinality of the given set. According to (4), probability of assigning a subband increases as its availability increases. This favors the selection of subbands that can be allocated to more users with an high SINR.

Subsequently, the assignment of a primary subband in a preferred embodiment is discussed in more detail.

Primary subband can be assigned centrally or autonomously. It is allocated to cell edge UEs and cannot be used by the interfering BSs. Therefore, a BS sends a primary subband indicator to the interfering BSs of the UEs to which a primary subband is allocated. Number of the primary subbands assigned to BSs is fixed and depending on the network conditions it can be adapted for each BS.

1) Central Assignment: After each BS receives the interfering BS IDs from the UEs, it sends these IDs to the central controller. Then, according to the received feedback, central controller assigns primary subbands to BSs. Detailed description of the central subband allocation can be found in [17].

2) Autonomous Assignment: In an autonomous primary subband allocation, the BS updates its primary subband assignment according to the feedback of the UEs to which the primary subband is allocated during the previous time slot. The primary subband selection algorithm is given in the following pseudo code where N' is the set of all subbands which are not assigned as a primary subband in the previous time slot, P is the set of primary subbands and p is the primary subband to be updated.

According to the pseudo code in Fig. 9c, the algorithm first calculates the availability of subbands. For this purpose, only the measurements of the set of UEs to which p is allocated during the previous time slot is used. As the cell edge UEs have the priority to use the primary subband, it is reasonable to update the primary subband assignment based on the measurements of UEs to which primary subband is allocated. Among N', the algorithm searches for a subband whose availability is higher than the primary subband, p. If there is such a subband, say n, then it is substituted for p in P with a probability of $\mu(n)$ as calulated in (4). If the probability criteria does not hold for n, then n is discarded from the subband set N' and the algorithm searches in N' for an another subband which has a higher availability than p. This process continues until the algorithm assigns a new primary subband or none of the subbands in N' has higher availability than $A_p$. If no subband substitutes for p as a primary subband, p remains as a primary subband for the next time slot. As a result, the primary subband assigned for the next time slot always has higher or equal availability than the primary subband assigned in previous time slot. This way, more cell edge UEs can experience high SINR, hence high capacity. The whole algorithm is repeated for each primary subband which is assigned during the previous time slot.

Subsequently, a preferred embodiment of the assignment of secondary subbands is discussed. After the primary subband assignment, as a next step, a BS searches for further subbands that it can allocate to UEs. Unlike the primary subband, the secondary subband cannot be banned at interfering BSs and it is only allocated to the UEs which measures SINR higher than $\gamma_{th}$ over the secondary subband. Thus, as the availability of a subband increases, it can be allocated to more users. This increases the fairness between UEs. A BS can use as much subbands as it can depending on its interference environment. Nevertheless, in some situations, there can be a maximum limit on the number of subbands, $N_{max}$, that a BS can assign. This restricts the maximum number of secondary subbands that can be used. The secondary subband selection algorithm is given in the following pseudo code where N is the set of all subbands, S is the set of secondary subbands, P is the set of primary subbands and the operator |.| indicates the cardinality of the given subband set.

According to the pseudo code in Fig. 9b, the algorithm first calculates the availability of subbands. For this purpose, unlike the primary subband assignment, the measurements of all UEs are taken into account. Before selecting any secondary subband, the BS discards the subbands having zero availability from the secondary subband set, S , because either these subbands are banned by the serving BSs of the victim UEs or all UEs in the cell experiences SINR lower than $\gamma_{th}$ over these subbands. Therefore, such subbands cannot be used for the next time slot. The algorithm searches for a subband whose availability is higher than minAvail among the set of subbands which are not assigned as primary or secondary subbands, N'. If there is no limitation on the maximum number of assigned subbands, the BS can assign any subband as a secondary subband as long as its availability is greater than 0, which means minAvail = 0. If there is such a subband, say n, then the algorithm updates S by adding n to S with a probability of $\mu(n)$. n is discarded from the subband set N' and this process continues until none of the subbands in N' has higher availability than minAvail .

If there is a limitation on the maximum number of assigned subbands, same algorithm is followed as long as the total number of assigned subbands is smaller than $N_{max}$. When the number of assigned subbands reaches $N_{max}$, minAvail is set as the minimum availability of S, instead of 0. In other words, minAvail = min $(A_s)$. Then, if there is a subband n in N', having availability higher than minAvail, the algorithm updates S by substituting n for the subband having the minimum availability in S with a probability of $\mu(n)$. It is clear that the updated secondary subbands set has always higher or equal availability than the secondary subband set assigned in the previous time slot.

As a final remark, in order to increase the resource utilization, different SINR threshold than $\gamma_{th}$ can be used for the secondary subband assignment. During the calculation of the subband availability for secondary subband assignment, if a lower SINR threshold than $\gamma_{th}$ is used, the availability of subbands increases. This, hence, increases the probability of assignment of more secondary subbands.

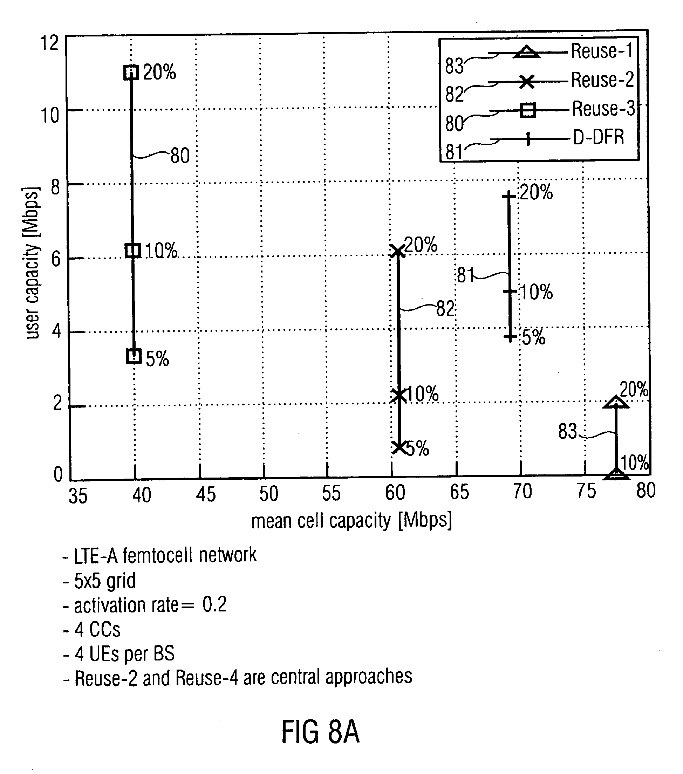

Subsequently, simulation results are discussed in the context of Figs. 8a to 8d.

1) Simulation Setup: In a simulator, a downlink transmission in a femtocell network is considered in [22]. The deployment of femtocells is modeled by a 5x5 grid, where a single floor building with 25 apartments, each having 10m x 10m area is used. BSs and UEs are randomly dropped within the apartment during each 'snapshot' of the simulation. The BS serves 4 UEs that are also located in the same apartment. The number of RBs per subband is set as 4. Thus, a BS can distribute a subband among 4 UEs. BS activation probability is set as 0.2 meaning one fifth of the apartments, on average, have one active BS. For the sake of simplicity, interference from the macrocell network is neglected, which may be accomplished by allocating different frequency bands to macro and femtocells. Even if co-channel macrocells are simulated, the trends in results will still remain the same. Parameters used in simulations are based on LTE specifications, but with bandwidth extension. They are summarized in Table 1 [22].

Table 1: Simulation Parameters

| Parameter | Value |
| --- | --- |
| CC bandwidth | 10 MHz |
| System bandwidth | 40 MHz (4x10 MHz) |
| Traffic model | Full buffer |
| min. sep. between UE and BS | 20 cm |

(continued)

| Parameter | Value |
|---|---|
| BS antenna gain | 0 dBi |
| Antenna Pattern (Horizontal) | $A(\theta) = 0$ dB (omnidirectional) |
| Interior path loss | $L = 127 + 30\log_{10}d$ [km], where d is the distance between UE and BS |
| Shadowing std. dev. | 10 dB |
| max Tx power over a CC | 20 dBm |
| Thermal Noise Density | $N_0 = -174$ dBm/Hz |
| UE Noise Figure | 9 dB |

For capacity calculations, the attenuated and truncated Shannon bound is used. It gives the capacity of a channel with link adaptation, which means the modulation and coding schemes are selected based on SINR. Given a specific $\gamma_{m,r}$, the spectral efficiency of $UE_m$ on RB r in [bps/Hz] is calculated as [23]:

$$\bar{C}_{m,r} = \begin{cases} \bar{C}_{\min} & \text{for } \gamma_{m,r} < \gamma_{\min} \\ \alpha\log_2(1+\gamma_{m,r}) & \text{for } \gamma_{\min} < \gamma_{m,r} < \gamma_{\max} \\ \bar{C}_{\max} & \text{for } \gamma_{m,r} > \gamma_{\max} \end{cases} \qquad (5)$$

where $\alpha$ is the attenuation factor which represents implementation losses, $\gamma_{\min}$ and $\gamma_{\max}$ are the minimum and maximum SINRs used by the available modulation and coding schemes. Values of these parameters are given in Table 2 [23,24]. Given the set $R_m$ of the RBs allocated to user $UE^m$, the capacity $C_m$ of $UE_m$ amounts to

$$C_m = \sum_{r \in R_m} B_r \bar{C}_{m,r} \qquad (6)$$

where $B_r$ is the bandwidth of RB $r$.

Each snapshot of the simulator lasts after 10 time slots. During the snapshot, positions and shadowing values of BSs and UEs do not change. This is reasonable since in indoor networks, the positions of users do not change drastically. The statistics, such as SINR and capacity, are calculated at the end of the $10^{th}$ time slot.

Table 2: Link to System Mapping Parameters.

| Parameter | Value |
|---|---|
| $\bar{C}_{\min}$, $\bar{C}_{\max}$ [bps/Hz] | 0,4.4 |
| $\alpha$ | 0,6 |
| $\gamma_{\min}$, $\gamma_{\max}$ | -10, 19.5 dB |

2) Results: In simulations, the D-DFR is compared with the fixed frequency reuse-2 and reuse-4 where a central controller assigns each BS 2 subbands and 1 subband respectively. For instance, for reuse-4, a BS identifies three most interfering neighbors according to the interference measured by its UEs. Then, the BS informs the central controller and the central controller assigns the BS a subband different than its interfering neighbors. For D-DFR, there is no central control over BSs; each BS assigns primary and secondary subbands autonomously. The SINR threshold, $\gamma_{th}$, is set to 5 dB and the number of primary subband per BS is set to 1. There is no limitation on the bandwidth that a BS can use which means $n_{\max} = 4$. At the beginning of each snapshot, BSs randomly assign one subband as a primary subband and then depending on feedback, they update their subband allocations during next time slots.

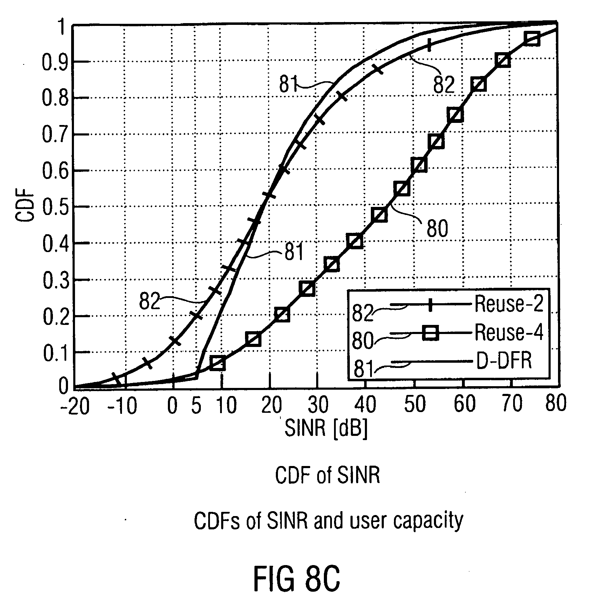

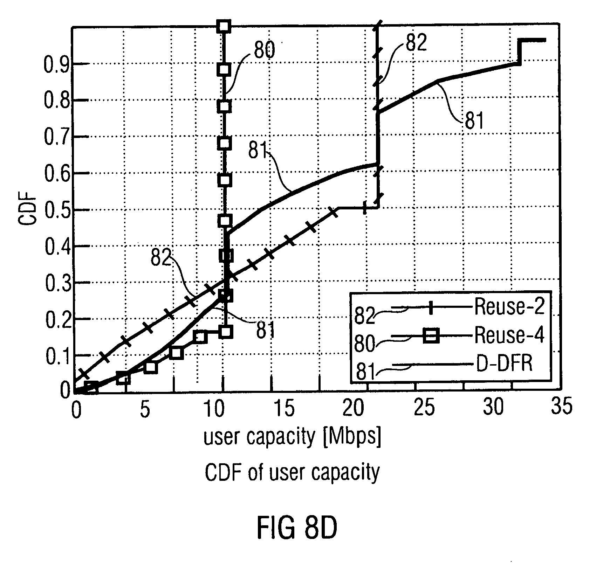

Figs. 8c and 8d show the cumulative distribution functions (CDFs) of SINR and user capacity, respectively. According to Fig. 8c, with D-DFR, nearly all UEs achieve an SINR exceeding 5 dB, which is the value of $\gamma_{th}$. As each bs

uses one subband, with reuse-4, best SINR distribution is achieved. However, as it will be shown in the next figure, this is not translated into a higher capacity.

Fig. 8d compares the user capacity distributions of the three methods. Due to the Shannon bound in (5), spectral efficiencies cannot be further increased for SINR values exceeding 19.5 dB. Therefore, nearly 83% of the UEs experience a capacity of 11 Mbps for reuse-4 and nearly half of the UEs experience a capacity of 22 Mbps for reuse-2. It is seen from Fig. 8d that reuse-4 shows better performance than reuse-2 up to 11 Mbps. After this point to 22 Mbps, reuse-2 outperforms reuse-4 because of the double transmission bandwidth. Since each BS can only use one subband at reuse-4 method, the increased SINR cannot compensate the reduced resources utilization of the UEs facing less interference, thus causing their capacity to decrease at this region. Consequently, by increasing the reuse factor, high cell edge performace is obtained but with a dramatic decrease in average cell capacity. With the D-DFR, high cell edge capacity similar to reuse-4 is achieved with a bearable decrease at high capacity regions. Only, between 11 and 22 Mbps, reuse-2 outperforms the D-DFR because of the more bandwidth allocated to reuse-2 UEs. On the other hand, in D-DFR, more subbands are assigned to the UEs that are exposed to low interference. Thus, D-DFR outperforms both reuse methods at capacities higher than 22 Mbps. Table 3 compares the cell edge capacity (defined as the 5% of the CDF of user capacity) and the average cell capacity performances of three methods. The resuts show that the D-DFR has best cell edge and average cell capacity performance. This indicates that with D-DFR, cell edge capacity is boosted without any degradation in average cell capacity which cannot be achieved by most frequency reuse methods.

Table 3: Performance of the Fixed Reuse and D-DFR

|  | Cell Edge Cap. | Average Cell Cap. |
| --- | --- | --- |
|  | [Mbps] | [Mbps] |
| Reuse-2 | 0.7 | 61.6 |
| Reuse-4 | 3.6 | 40.3 |
| D-DFR | 3.9 | 72.3 |

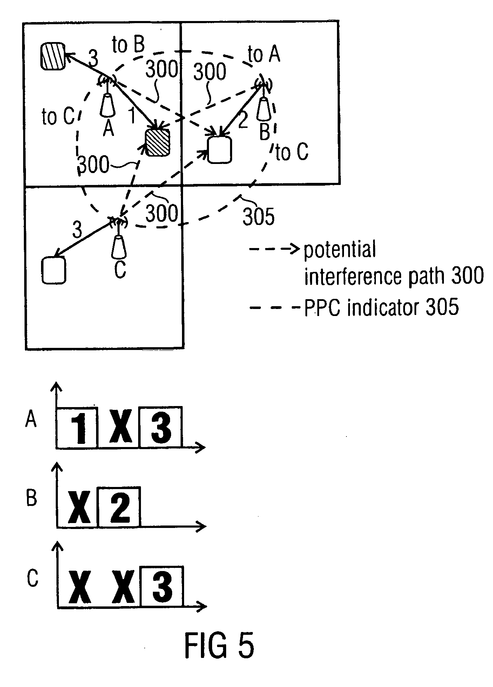

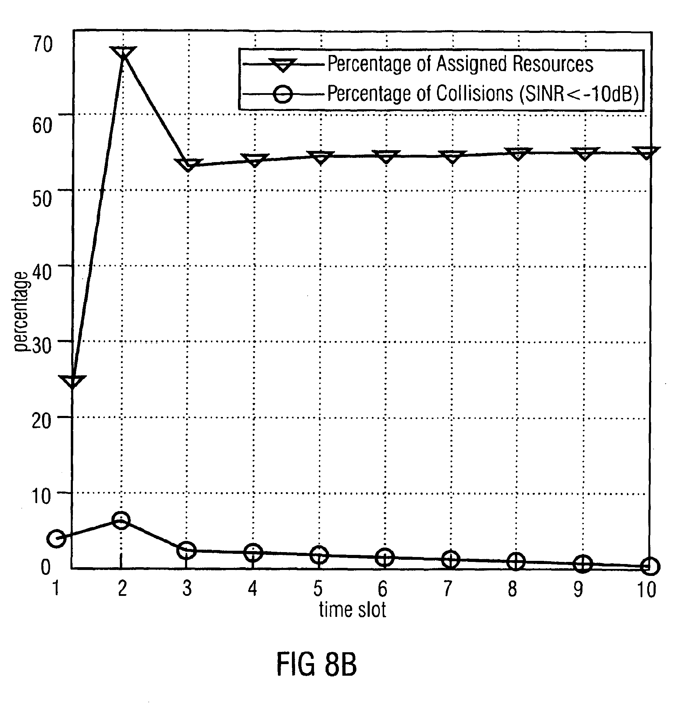

Fig. 8b shows the percentage of the resources allocated to UEs and the percentage of these allocated resources which face SINR below -10 dB. According to the parameters given in Table 3, below -10 dB, spectral efficiency becomes 0. Therefore, the allocate resource facing SINR below -10 dB named as collision. Each measurements are done at the end of each time slot. Since each BS randomly assigns one subband as a primary subband for the first time slot, the percentage of the allocated resources is always 25%. Also, random subband assignment increases the percentage of collisions. Then, before the second time slot, UEs report their SINR measurements and IDs of interfering BSs to their BSs. Depending on the SINR values, BSs assign further subbands as secondary subbands during the second time slot and send a primary subband indicator to the interfering BSs. Assignment of the subbands based only on SINR levels, increases the number of used subbands and the collisions because BSs do not know their neighboring BSs yet. As can be seen in Fig. 5, during second time slot, percentage of the assigned resources and collisions increase up to 70% and 6.7% respectively. However, before the 3$^{rd}$ time slot, for the first time, BSs receive primary subband indicators from the serving BSs of victim UEs that are sent at the begining of the second time slot. These primary subband indicators restric the interfering BSs to use their neighbors' primary subbands. Additionally, with the received SINR levels, BSs learn more about the subbands used by its interfering neighbors. Therefore, the percentage of the assigned resources and the collisions both decrease during the third time slot. After the third time slot, the percentage of the assigned resources increases with a decrease in the percentage of the collisions, as the BSs become more aware of their neighbors' decisions. Actually, only after the 4$^{th}$ time slot, subband allocation becomes stable which is the another advantage of D-DFR.

Fig. 8a illustrates the performance evaluation as user capacity [Mbps] as a function of the mean cell capacity [Mbps]. Fig. 8a illustrates that the dynamic procedure in accordance with the present invention as illustrated at 81 outperforms the reuse-to scenario indicated at 82 and, of course, the reuse-one scenario indicated at 83.

The present invention provides the compromise between a fully central approach or a fully distributed approach. In the fully central approach, transmission resources are assigned by a central controller. The resource utilization is more efficient than in the distributed approach, but an extra signaling between the base stations and the controller is required. On the other hand, the distributed approach allows less complexity, since the transmission resources are assigned autonomously by the base stations.

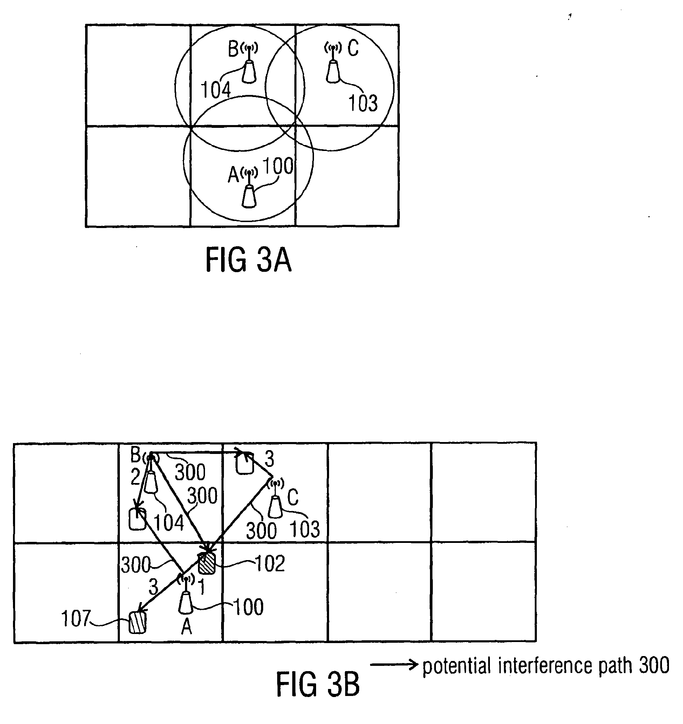

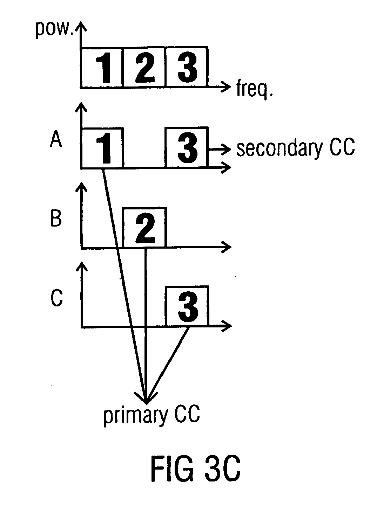

Fig. 3c illustrates, together with Fig. 3a and Fig. 3b, the advantage of the present invention obtained by the distributed dynamic frequency reuse. Fig. 3c illustrates that the base station 100 has associated channel one as the primary transmission resource, base station two has associated channel two as the primary transmission resource and base station three has associated channel three as the primary transmission resource. Importantly, however, base station a is in the position to allocate a secondary transmission resource (secondary CC) for communicating with the user equipment 107, while the first user equipment 102 has the primary transmission resource. The potential interference path are indicated at 300. The multi-user deployment as illustrated in Fig. 3c is unique in that each user in the same cell experiences different interference conditions and this fact is advantageously used by the present invention. The transmission resource allocation is done according to the user equipment measurements for high resource utilization by allocating primary transmission resources and, importantly, secondary transmission resources as, for example, channel three for the communication between the base station 100 and the user equipment 107.

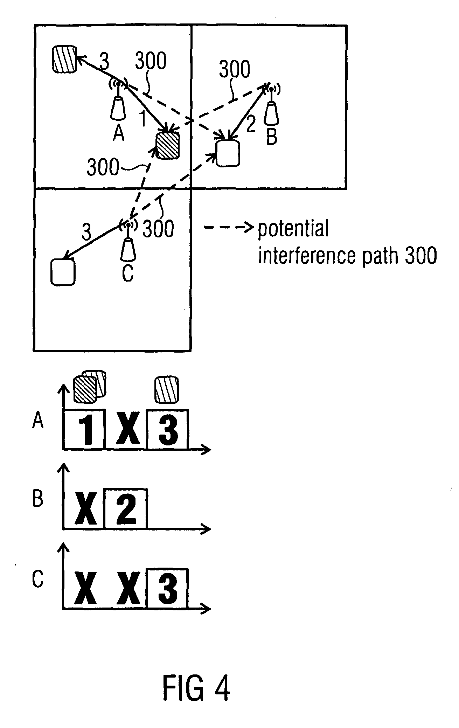

Regarding the transmission resource assignment for multi-user deployments, reference is made to Fig. 4. One rule of the preferred embodiment is that only one primary transmission resource per base station is used. This results in a protected region. Furthermore, there are banned transmission resources. A base station cannot use the primary transmission resource of its neighbors. This guarantees minimum SINR of predefined SINR threshold for all cell-edge user equipment. The secondary transmission resources can be used by the neighbors. This increases resource efficiency, especially for the multi-user deployment. The secondary transmission resources are preferably allocated to the user equipment according to the SINR threshold. Fig. 4 particularly illustrates that base station A has, as the primary transmission resource, channel 1 and has allocated, as the secondary transmission resource, channel 3. On the other hand, the banned transmission resources are channel two for base station A, channel one for base station B and channel one and two for base station C.

Subsequently, reference is made to Fig. 5 in order to further illustrate the measurements to be performed by the user equipment. Specifically, the information to be provided by the user equipment are the identification information (IDs) of the interfering base stations. To this end, each user equipment can measure the received power from each base station in its vicinity. Then, each user equipment identifies the interfering base station IDs according to the predefined SINR threshold. Then, the base station receiving this information from the user equipment uses this information for sending the primary resource indicator to the interfering neighbors in order to make sure that the primary resource is only used by a certain base station and the user equipment, which is associated with this primary transmission resource, is not interfered with the neighboring base stations.

Furthermore, the SINR levels of each transmission resource are determined by each user equipment. The present invention advantageously uses the fact that each user equipment observes different SINR in different transmission resources. The SINR levels are reported to the serving base station and the serving base station then uses this information to find out which transmission resources are available for transmission. Fig. 5 illustrates that the PCC indicator 305 transmitted between the base stations results in banned transmission resources at each base station. Fig. 5 further illustrates that each user equipment which is located outside an interference region can use the third channel as the secondary transmission resource even though the neighboring base station C uses the third channel as its primary transmission resource.

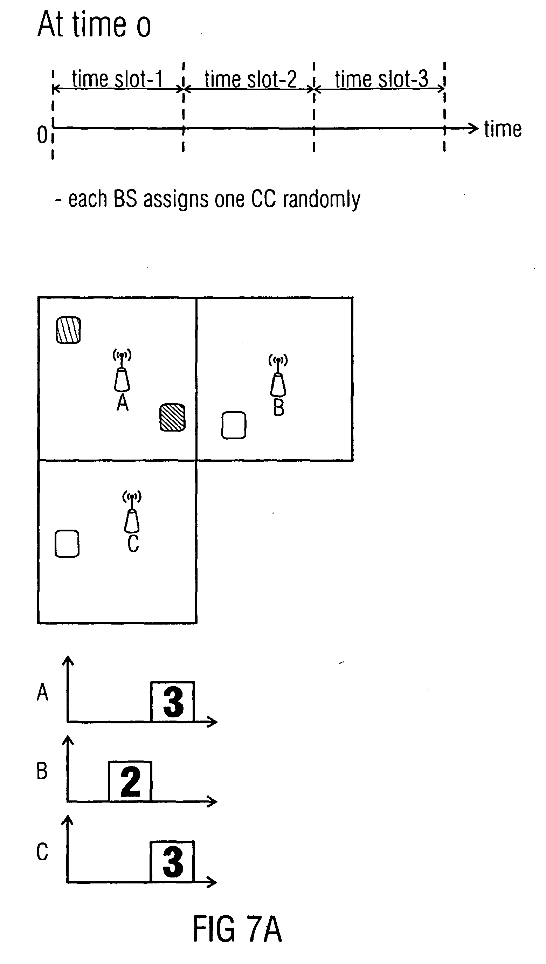

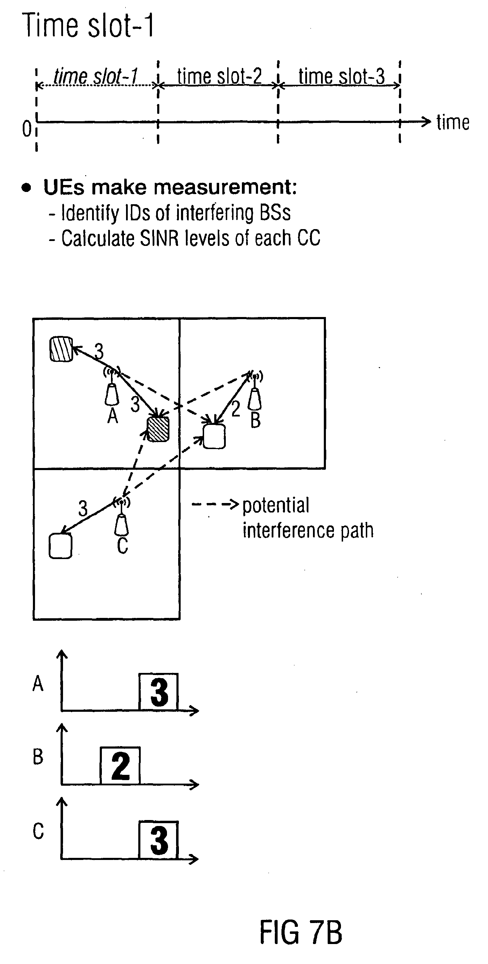

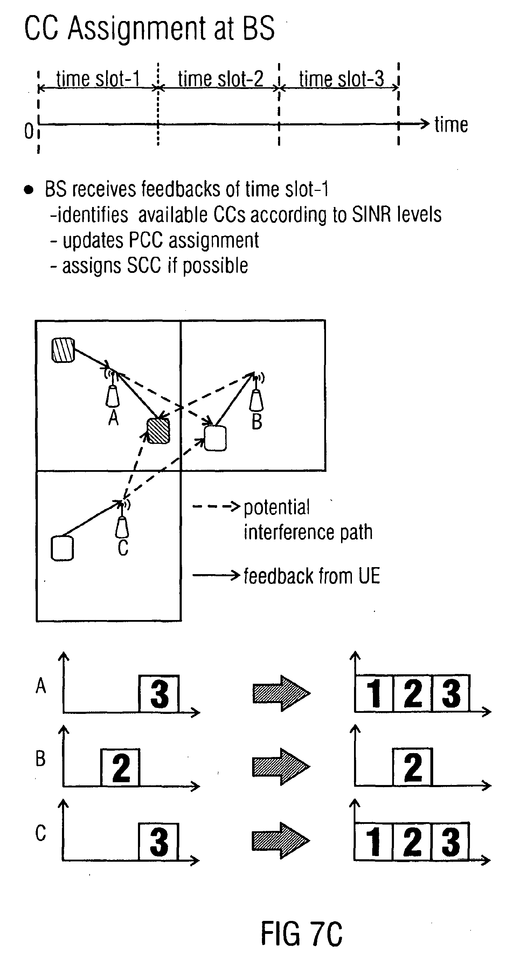

Subsequently, a sequence of exemplary steps and actions, which could be performed when performing a channel allocation, are discussed with respect to Figs. 7a to 7f. At time zero, i.e., in the beginning of time slot-one, each base station could assign one CC (transmission resource) randomly. This results in the Fig. 7a example, in a situation in which base stations A and C have channel three and base station B has channel two. During the first time slot, the user equipment makes measurements and identify the IDs of the interfering base stations and calculate SINR levels of each transmission resource. The potential interference paths are indicated in Fig. 7b. Then, at the end of time slot-one, the base station has received feedback of time slot-one. The base station then identifies the available transmission resources according to the SINR levels and updates the primary resource allocation (PCC) assignment and assigns secondary transmission resources if possible. This result, in the Fig. 7c example in a situation, in which base station A has channel one as the primary transmission resource, base station B has channel two at the primary transmission resource and base station C has 3 as the primary transmission resource. Hence, only a change for base station A is performed. Additionally, secondary transmission resources in the form of channels 2 and 3 are allocated for base station A and secondary transmission resources in the form of channels 1 and 2 are allocated for base station C.

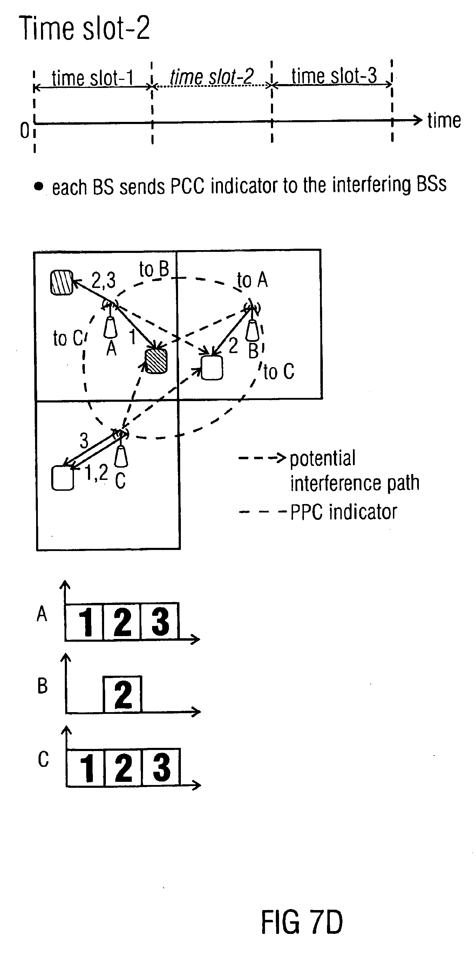

Then, as illustrated in Fig. 7d, each base station sends the primary transmission resource indicator to the interfering base stations and this happens within time slot-two. However, the allocation of the channels remains the same within time slot-two as discussed in the context of Fig. 7c.

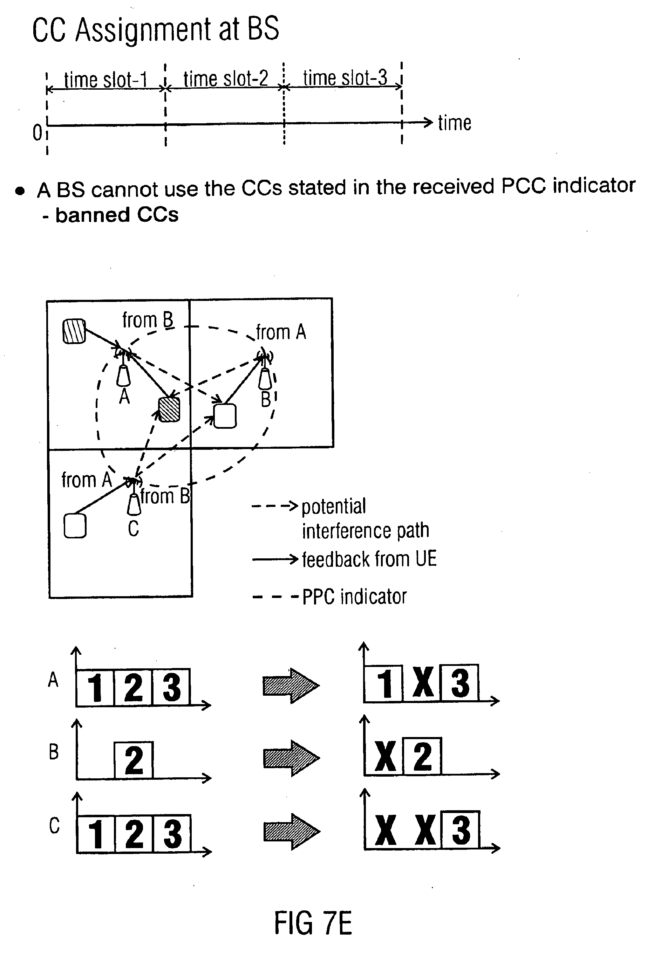

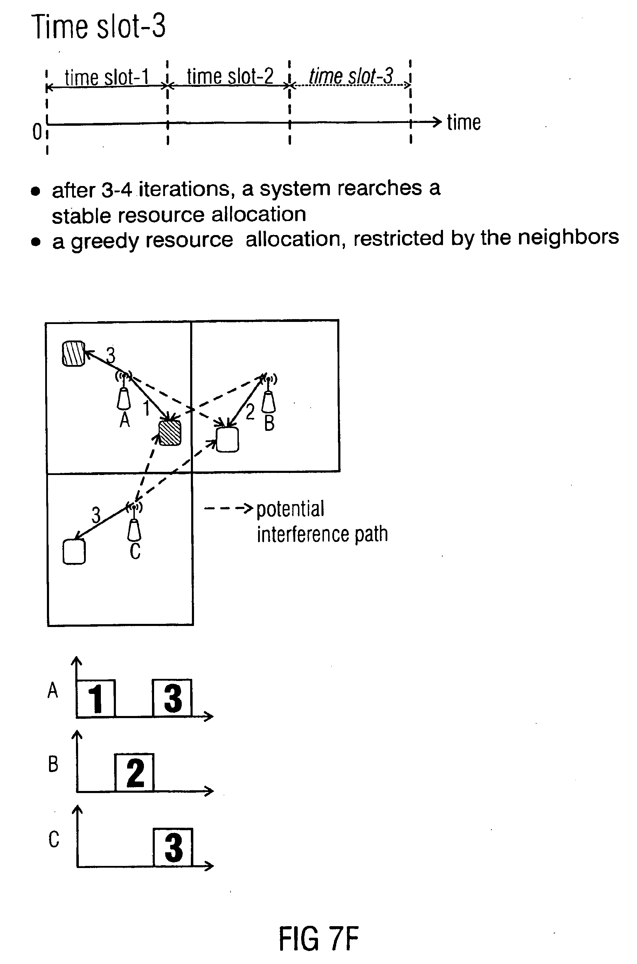

Then, as illustrated in Fig. 7e, the time slot-two is over and it is found out that a base station cannot use the transmission resources stated in the received transmission resource indicator indicating so-called banned transmission resources. These banned transmission resources are channel two for base station A, channel one for base station B and channels one and two for base station C. Therefore, the only secondary transmission resource remaining is channel three for base station A. Then, in time slot-three, this channel allocation is used as illustrated in Fig. 7f. It has been found out that, typically only after three to four iterations, a system reaches a stable resource allocation. The preferred algorithm can be considered to be a greedy resource allocation algorithm which is restricted by the neighbors.

In other words, the present invention can be seen as a method or a base station for dynamic frequency resource partitioning in order to mitigate interference in uncoordinated deployments in an autonomous way that neighboring base stations are assigned mutually different primary component carriers. The method or apparatus comprises means to inform adjacent cells on which primary component carriers are able to interference by means of inter-node signaling, so as to determine the resource allocation limitations for predefined SINR thresholds and user equipment and base station feedback. Additionally, the method/apparatus further comprises means to determine further secondary component carrier allocation by base stations in order to maximize the overall network performance, without imposing excessive interference to primary component carriers of adjacent cells. In an embodiment, the primary component carrier selection is carried out by a centralized method while in a further embodiment the primary component carrier selection is carried by a distributed method, where primary component carriers are allocated successively by a p-persistent medium access protocol.

The present invention has several advantageous effects. One effect is the extension of soft frequency reuse concepts to heterogeneous networks where, particularly, a dynamic interference mitigation in uncoordinated deployment is obtained.

Furthermore, an autonomous transmission resource (CC) selection is performed. This is particularly useful in the context of the 3GPP work item "study inter-node signaling" needed for robust autonomous solutions, where each BTS node selects two user carrier(s) that maximizes the overall network performance (RAN3).

Furthermore, the present invention is compatible with LTE-A networks.

Additionally, a higher bandwidth utilization than known from the prior art is obtained and also some flexibility in the number of assigned transmission resources depending on the interference conditions and in the selection of secondary transmission resources.

The present invention results in a low signaling overhead and has shown a quick convergence to the stable resource allocation. It can also be applied to the central approach in order to increase the resource efficiency for multi-user deployment.

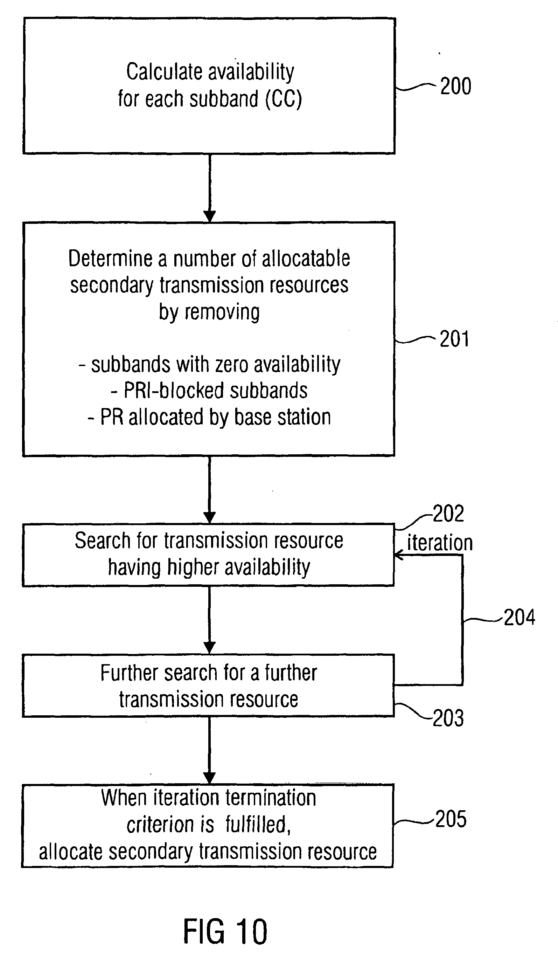

Fig. 10 illustrates a preferred procedure which is performed by the transmission resource allocator 16 of Fig. 1. In step 200, an availability measure for each of the plurality of transmission resources is calculated based on individual reception quality information received from the user equipment served by the base station.

In step 201, a number of allocatable secondary transmission resources is determined by removing, from the set of all transmission resources, transmission resources having zero availability, transmission resources being blocked by a primary transmission resource indicator received by the receiver and by removing the primary transmission resource allocated by the base station.

Then, in step 202 a search is performed for transmission resources having a higher availability than a minimum availability and the searches performed within the number of allocatable secondary transmission resources. Then, in step 203 a further search for a further transmission resource for the same user equipment or at least a further user equipment served by the base station is performed and the search and the further search are iteratively repeated 204 until a maximum number of allocatable secondary transmission resources is determined or all allocatable secondary transmission resources are determined. Hence, the maximum number of allocatable secondary transmission resources or all allocatable secondary transmission resources form the iteration termination criterion.

When, as illustrated in Fig. 10, item 205, the iteration termination criterion is fulfilled, the transmission resources found by the search step and the further search step are allocated to the at least one user equipment served by the base station as the secondary transmission resource are allocated to other user equipments served by the base station under consideration.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] H. Claussen, "Performance of Macro-and Co-Channel Femtocells in a Hierarchical Cell Structure" in Proc. of the 18th IEEE (International Symposium on Personal, Indoor and Mobile Radio Communications (PIMRC), Athens, Greece, Sep. 3-7, 2007, pp. 1-5

[2] Z. Bharucha, H. Haas, A. Saul, and G. Auer, "Throughput Enhancement through Femto-Cell Deployment" European Transactions on Telecommunications, vol. 21, no. 4, pp.469-477, Mar. 31, 2010 (invited).

[3] V. Chandrasekhar, J. Andrews, and A. Gatherer, "Femtocell Networks: A Survey, "IEEE Communications Magazine, vol. 46, no. 9, pp. 59-67, 2008

[4] Y.-Y. Li M. Macuha, E. Sousa, T. Sato and M. Nanri, "Cognitive Interference Management in 3G Femtocell", in Proc. of the IEEE Personal, Indoor and Mobile Radio Communications (PIMRC), Sep. 13-16, 2009, pp. 1118-1122

[5] J. Ling, D. Chizhik, and R. Valenzuela, "On Resource Allocation in Dense Femto-Deployments," in Proc. of the IEEE International Conference on Microwaves, Communications, Antennas and Electronics Systems (COMCAS), Nov. 9-11, 2009, pp. 1-6

[6] J. Ellenbeck, C. Hartmann, and L. Berlemann, "Decentralized Inter-Cell Interference Coordination by Autonomous Spectral Reuse Decisions," in Proc. of the 14th European Wireless Conference (EW), June. 22-25, 1008, pp. 1-7

[7] C. Lee, J.-H. Huang, and L.-C. Wang, "Distributed Channel Selection Principles for Femtocells with Two-Tier Interference." In Proc. of the 71st IEEE Vehicular Technology Conference (VTC), May 16-19, 2010, pp. 1-5

[8] X. Chu, Y. Wu, L. Benmesbah, and W.-K. Ling, "Resource Allocation in Hybrid Macro/Femto Networks," in Proc. of IEEE Wireless Communications and Networking Conference Workshops (WCNCW), Apr. 2010, pp. 1-5

[9] L. Garcia, K. Pedersen, and P. Mogensen, "Autonomous Component Carrier Selection for Local Area Uncoordinated Deployment of LTE-Advanced," in Proc. of IEEE Vehicular Technology Conference Fall (VTC 2009-Fall), 2009, pp. 1-5

[10] "Autonomous component carrier selection: Interference management in local area environments for LTE-advanced," IEEE Communications Magazine, vol. 47, no. 9, pp. 110-116, 2009.

[11] L. Zhang, L. Yang, and T. Yang, "Cognitive Interference Management for LTE-A Femtocells with Distributed Carrier Selection," in Proc. of IEEE Vehicular Technology Conference Fall (VTC 2010-Fall), 6-9, 2010.

[12] D. Lopez-Pérez, G. de la Roche, A. Valcarce, A. Jüttner and J. Zhang, "Interference Avoidance and Dynamic Frequency Planning for WiMAX Femtocells Networks," in Proc. of the 11th IEEE International Conference on Communication Systems (ICCS), Nov. 19-21 2008, pp. 1579-1584

[13] R. Chang, Z. Tao, J. Zhang, and C. C. Kuo, "A Graph Approach to Dynamic Fractional Frequency Planning for Networks," in Proc. of the IEEE International Conference on Communications (ICC), June. 14-18, 2009.

[14] M.C. Necker, "Integrated scheduling and interference coordination in cellular OFDMA networks," in Proc. of the Fourth International Conference on Broadband Communications, Networks and Systems (BROADNETS), Sep. 10-14 2007, pp. 559-566.

[15] H. Li, X. Xu, D. Hu, X. Qu, X. Tao, and P. Zhang, "Graph Method Based Clustering Strategy for Femtocell Interference Management and Spectrum Efficiency Improvement," in Proc. of 6th International Conference on Wireless Communication Networking and Mobile Computing (WiCOM), 23-25 2010, pp. 1-5.

[16] M.C. Necker, "A Graph-Based Scheme for Distributed Interference Coordination in Cellular OFDM Networks," in Proc. of the IEEE Vehicular Technology Conference (VTC), May 11-14 2008, pp. 713-718.

[17] S. Uygungelen, G. Auer and Z. Bharucha, "Graph-Based Dynamic Frequency Reuse in Femtocell Networks," in Proc. of IEEE Vehicular Technology (VTC). May 2011.

[18] 3GPP, TR 36.913. Requirements for Further Advancements for Evolved Universal Terrestrial Radio Access (E-UTRA) (LTE-Advanced)." Dec. 2009.

[19] "Requirements for Evolved UTRA (E-UTRA) and Evolved UTRAN (E-UTRAN)," 3GPP TS 25.913 V 8.0.0 (2008-12), Dec. 2008, Retrieved Oct. 10, 2009 from www.3gpp.org/ftp/Specs/.

[20] M. Iwamura, K. Etemad, m: Fong; R. Nory, and R. Love, "Carrier Aggregation Framework in 3GPP LT-Advanced," IEEE Communications Magazine, vol. 48, no. 8, pp. 60-67, Aug. 2010.

[21] S. Abeta, "Toward LTE commercial launch and future plan for LTE enhancements (LTE-Advanced)," in Proc. of IEEE International Conference on Communication Systems (ICCS), 17-19 2010, pp. 146-150.

[22] 3GPP, "Simulation Assumptions and Parameters for FDD HeNB RF Requirements," 3GPP TSG RAN WG4-092042. May 2009 from www.3gpp.org/ftp/Specs/.

[23] "Evolved Universal Terrestrial Radio Access (E-UTRA): Radio Frequency (RF) System Scenarios," 3GPP TR 36.942 V8.2.0. Jun. 2010 from www.3gpp.org/ftp/Specs.

[24] A. Persson, T. Ottosson, A. Saul, G. Auer, and M. Afgani, "On the Performance of Inter-Sector Scheduling in OFDMA Systems," FREQUENZ Journal of RF-Engineering and Telecommunications, vol. 61, pp. 47-50, Jan. 2007

**Claims**

1. Base station for communicating with a plurality of user equipments assigned to the base station, comprising:

   a receiver (10) adapted for receiving, from a first one of a plurality of user equipments, one or more identifications (12) of further base stations interfering with the first user equipment in a transmission resource of a plurality of transmission resources, and adapted for receiving, from a further base station, a primary resource indicator (14) indicating the primary transmission resource for the further base station, in which a further user equipment assigned to the further base station would suffer an interference from the base station; and
   a transmission resource allocator (16) adapted for allocating a secondary transmission resource to the second user equipment from the set of available transmission resources, wherein the set of available transmission resources does not include the primary transmission resource indicated by the primary resource indicator (14), **characterized in that** the transmission resource allocator (16) is adapted for calculating (200) an availability measure for each of the plurality of transmission resources based on individual reception quality information received from the user equipment served by the base station and adapted for allocating the secondary transmission resource based on the availability measure for the specific transmission resource.

2. Base station in accordance with claim 1, wherein the transmission resource allocator is adapted for allocating a primary transmission resource to the first user equipment, the primary transmission resource being different from the primary transmission resource indicated by the primary transmission resource indicator,
wherein the base station further comprises a transmitter adapted for transmitting a primary transmission resource indicator to a further base station, wherein the further base station is a base station causing an interference in the primary transmission resource at the first user equipment as determined by the one or more identifications (12) received by the receiver (10) from the first user equipment.

3. Base station in accordance with claim 1 or 2, in which the receiver is adapted for receiving reception quality information (24) for a plurality of different transmission resources from the second user equipment,
wherein the transmission resource allocator is adapted for only allocating a secondary transmission resource to the second user equipment, for which the receiver has received, from the second user equipment, a reception quality information indicating a reception quality above a predetermined reception quality threshold.

4. Base station in accordance with one of the preceding claims, in which the receiver (10) is adpated for receiving the one or more identifications and a reception quality information in a first time slot, and in which the transmission resource allocator is adapted for allocating, based on information received by the receiver (10), in a second time slot being later in time than the first time slot.

5. Base station in accordance with claim 2, in which the receiver (10) is adpated for receiving the one or more identifications and the reception quality information in a first time slot, and in which the transmitter is adapted for transmitting the primary transmission resource indicator in a second time slot being later in time than the first time slot.

6. Base station in accordance with one of the preceding claims, in which the transmission resource allocator (16) is adapted for allocating the secondary transmission resource only to a user equipment, for which a reception quality measure provided by the user equipment is above a predetermined reception quality measure threshold.

7. Base station in accordance with one of the preceding claims, in which the transmission resource allocator (16) is adapted for allocating as many secondary transmission resources as possible to the plurality of user equipments served by the base station or adapted for allocating only a number of transmission resources bound by a predefined maximum number allocatable by the base stations.

8. Base station in accordance with claim 1, in which the transmission resource allocator (16) is adapted for performing the following sequence of steps:

determine (201) a number of allocatable secondary transmission resources by removing, from the set of all transmission resources, transmission resources having zero availability, transmission resources being blocked by a primary transmission resource indicator received by the receiver and the primary transmission resource allocated by the base station,
adapted for searching (202) for a transmission resource having a higher availability than a minimum availability in the number of allocatable secondary transmission resources,
further adapted for searching search (203) for a further transmission resource for the same user equipment or at least a further user equipment served by the base station,
wherein the search step and the further search step are iteratively repeated (204) until a maximum number of allocatable secondary transmission resources is determined or all allocatable secondary transmission resources are determined, and
adapted for allocating (205) the transmission resources found by the search step and the further search step to at least one user equipment served by the base station as the secondary transmission resource.

9. Base station in accordance with claim 1,
in which the transmission resource allocator (16) is adapted for calculating an availability for a specific transmission resource by accumulating the number of user equipments which are served by the base station and which report to the base station a reception quality information indicating the reception quality above a predetermined threshold for the specific transmission resource.

10. Base station in accordance with one of the preceding claims, in which the transmission resource allocator (16) is adapted for receiving instructions to allocate a primary transmission resource from a central controller so that the base station allocates the primary transmission resource to a user equipment served by the base station, and in which the secondary transmission resource allocation is performed by the transmission resource allocator of the base station in a decentralized distributed way.

11. Base station in accordance with one of the preceding claims, in which the transmission resource allocator (10) is adapted for performing a distributed procedure for the allocation of the primary transmission resource (28) by only allocating a primary transmission resource not blocked by a primary transmission resource indicator (14) from a further base station as received by the receiver (10), and by selecting a transmission resource having an availability measure being higher than a minimum availability measure of the allocatable transmission resources.

12. Base station in accordance with one of the preceding claims, in which the transmission resource allocator (16) is adapted for reallocating a primary transmission resource for a later time slot in case of receiving a primary resource indicator (14) for the allocated primary transmission resource, and wherein the at least one secondary transmission resource (18) allocated in an earlier time slot is available for being selected as a primary transmission resource (28) for the later time slot.

13. Method of operating a base station for communicating with a plurality of user equipments assigned to the base station, comprising:

receiving (10), by the base station, from a first one of a plurality of user equipments one or more identifications of further base stations interfering with the first user equipment in a transmission resource of a plurality of transmission resources;

receiving, by the base station, from a further base station, a primary resource indicator indicating the primary transmission resource for the further base station, in which a further user equipment assigned to the further base station would suffer an interference from the base station; and

allocating (16), by the base station, a secondary transmission resource to the second user equipment from the set of available transmission resources, wherein the set of available transmission resources does not include the primary transmission resource indicated by the primary resource indicator,

**characterized in that** the allocating (16) comprises calculating (200) an availability measure for each of the plurality of transmission resources based on individual reception quality information received from the user equipment served by the base station and allocating the secondary transmission resource based on the availability measure for the specific transmission resource.

14. Computer program comprising computer program code means adapted to perform, when running on a processor, the method of claim 13.

**Patentansprüche**

1. Basisstation zum Kommunizieren mit einer Mehrzahl von Nutzerausrüstungen, die der Basisstation zugewiesen sind, die folgende Merkmale aufweist:

einen Empfänger (10), der angepasst ist zum Empfangen, von einer ersten einer Mehrzahl von Nutzerausrüstungen, einer oder mehrerer Identifikationen (12) weiterer Basisstationen, die die erste Nutzerausrüstung in einer Übertragungsressource einer Mehrzahl von Übertragungsressourcen stören, und angepasst ist zum Empfangen, von einer weiteren Basisstation, eines Primärressourcenindikators (14), der die Primärübertragungsressource für die weitere Basisstation anzeigt, in der eine weitere Nutzerausrüstung, die der weiteren Basisstation zugeordnet ist, eine Störung von der Basisstation erleiden würde; und

einen Übertragungsressourcenzuordner (16), der angepasst ist zum Zuordnen einer Sekundärübertragungsressource zu der zweiten Nutzerausrüstung von dem Satz verfügbarer Übertragungsressourcen, wobei der Satz verfügbarer Übertragungsressourcen die Primärübertragungsressource, die durch den Primärressourcenindikator (14) angezeigt wird, nicht umfasst,

**dadurch gekennzeichnet, dass** der Übertragungsressourcenzuordner (16) angepasst ist zum Berechnen (200) eines Verfügbarkeitsmaßes für jede der Mehrzahl von Übertragungsressourcen basierend auf einzelnen Empfangsqualitätsinformationen, die von der Nutzerausrüstung empfangen werden, die durch die Basisstation bedient wird, und angepasst ist zum Zuordnen der Sekundärübertragungsressource basierend auf dem Verfügbarkeitsmaß für die spezifische Übertragungsressource.

2. Basisstation gemäß Anspruch 1, bei der der Übertragungsressourcenzuordner angepasst ist zum Zuordnen einer Primärübertragungsressource zu der ersten Nutzerausrüstung, wobei sich die Primärübertragungsressource von der Primärübertragungsressource unterscheidet, die durch den Primärübertragungsressourcenindikator angezeigt wird,
wobei die Basisstation ferner einen Sender aufweist, der angepasst ist zum Senden eines Primärübertragungsressourcenindikators zu einer weiteren Basisstation, wobei die weitere Basisstation eine Basisstation ist, die in der Primärübertragungsressource bei der ersten Nutzerausrüstung eine Störung bewirkt, wie es durch die eine oder mehrere Identifikation (12) bestimmt wird, die durch den Empfänger (10) von der ersten Nutzerausrüstung empfangen werden.

3. Basisstation gemäß Anspruch 1 oder 2, bei der der Empfänger angepasst ist zum Empfangen von Empfangsqualitätsinformationen (24) für eine Mehrzahl von unterschiedlichen Übertragungsressourcen von der zweiten Nutzerausrüstung,
wobei der Übertragungsressourcenzuordner angepasst ist, um nur eine Sekundärübertragungsressource zu der zweiten Nutzerausrüstung zuzuordnen, für die der Empfänger von der zweiten Nutzerausrüstung eine Empfangsqualitätsinformation empfangen hat, die eine Empfangsqualität über einem vorbestimmten Empfangsqualitätsschwellenwert anzeigt.

4. Basisstation gemäß einem der vorhergehenden Ansprüche, bei der der Empfänger (10) angepasst ist zum Empfangen der einen oder mehreren Identifikationen und einer Empfangsqualitätsinformation in einem ersten Zeitschlitz, und bei der der Übertragungsressourcenzuordner angepasst ist zum Zuordnen, basierend auf einer Information, die durch den Empfänger (10) empfangen wird, in einem zweiten Zeitschlitz, der zeitlich später liegt als der erste Zeitschlitz.

5. Basisstation gemäß Anspruch 2, bei der der Empfänger (10) angepasst ist zum Empfangen der einen oder mehreren Identifikationen und der Empfangsqualitätsinformation in einem ersten Zeitschlitz, und bei der der Sender angepasst ist zum Senden des Primärübertragungsressourcenindikators in einem zweiten Zeitschlitz, der zeitlich später liegt als der erste Zeitschlitz.

6. Basisstation gemäß einem der vorhergehenden Ansprüche, bei der der Übertragungsressourcenzuordner (16) angepasst ist zum Zuordnen der Sekundärübertragungsressource nur zu einer Nutzerausrüstung, für die ein Empfangsqualitätsmaß, das durch die Nutzerausrüstung bereitgestellt wird, über einem vorbestimmten Empfangsqualitätsmaßschwellenwert liegt.

7. Basisstation gemäß einem der vorhergehenden Ansprüche, bei der der Übertragungsressourcenzuordner (16) angepasst ist zum Zuordnen so vieler Sekundärübertragungsressourcen wie möglich zu der Mehrzahl von Nutzerausrüstungen, die durch die Basisstation bedient werden, oder angepasst ist zum Zuordnen nur einer Anzahl von Übertragungsressourcen, die begrenzt ist durch eine vordefinierte maximale Anzahl, die durch die Basisstationen zuordenbar ist.

8. Basisstation gemäß Anspruch 1, bei der der Übertragungsressourcenzuordner (16) angepasst ist zum Durchführen der folgenden Reihenfolge von Schritten:

Bestimmen (201) einer Anzahl von zuordenbaren Sekundärübertragungsressourcen durch Entfernen, von dem Satz aller Übertragungsressourcen, von Übertragungsressourcen mit null Verfügbarkeit, Übertragungsressourcen, die durch einen Primärübertragungsressourcenindikator blockiert sind, der durch den Empfänger empfangen wird, und die Primärübertragungsressource, die durch die Basisstation zugeordnet ist,
angepasst ist zum Suchen (202) nach einer Übertragungsressource mit einer höheren Verfügbarkeit als einer minimalen Verfügbarkeit in der Anzahl von zuordenbaren Sekundärübertragungsressourcen,
ferner angepasst ist zum Suchen (203) nach einer weiteren Übertragungsressource für die gleiche Nutzerausrüstung oder zumindest eine weitere Nutzerausrüstung, die durch die Basisstation bedient wird,
wobei der Suchschritt und der weitere Suchschritt iterativ wiederholt werden (204), bis eine maximale Anzahl von zuordenbaren Sekundärübertragungsressourcen bestimmt ist oder alle zuordenbaren Sekundärübertragungsressourcen bestimmt sind, und
angepasst zum Zuordnen (205) der Übertragungsressourcen, die durch den Suchschritt und den weiteren Suchschritt gefunden werden, zu zumindest einer Nutzerausrüstung, die durch die Basisstation bedient wird, als die Sekundärübertragungsressource.

9. Basisstation gemäß Anspruch 1,
bei der der Übertragungsressourcenzuordner (16) angepasst ist zum Berechnen einer Verfügbarkeit für eine spezifische Übertragungsressource durch Ansammeln der Anzahl von Nutzerausrüstungen, die durch die Basisstation bedient werden, und die der Basisstation eine Empfangsqualitätsinformation melden, die die Empfangsqualität über einem vorbestimmten Schwellenwert für die spezifische Übertragungsressource anzeigt.

10. Basisstation gemäß einem der vorhergehenden Ansprüche, bei der der Übertragungsressourcenzuordner (16) angepasst ist zum Empfangen von Anweisungen, um eine Primärübertragungsressource von einer zentralen Steuerung zuzuordnen, sodass die Basisstation die Primärübertragungsressource zu einer Nutzerausrüstung zuordnet, die durch die Basisstation bedient wird, und
bei der die Sekundärübertragungsressourcenzuordnung durch den Übertragungsressourcenzuordner der Basisstation auf eine dezentralisierte verteilte Weise durchgeführt wird.

11. Basisstation gemäß einem der vorhergehenden Ansprüche, bei der der Übertragungsressourcenzuordner (10) angepasst ist zum Durchführen einer verteilten Prozedur für die Zuordnung der Primärübertragungsressource (28), indem nur eine Primärübertragungsressource zugeordnet wird, die nicht durch einen Primärübertragungsressourcenindikator (14) von einer weiteren Basisstation blockiert ist, wie er durch den Empfänger (10) empfangen wird, und durch Auswählen einer Übertragungsressource mit einem Verfügbarkeitsmaß, das höher ist als ein minimales Verfügbarkeitsmaß der zuordenbaren Übertragungsressourcen.

12. Basisstation gemäß einem der vorhergehenden Ansprüche, bei der der Übertragungsressourcenzuordner (16) angepasst ist zum Neuzuordnen einer Primärübertragungsressource für einen späteren Zeitschlitz, falls ein Primärressourcenindikator (14) für die zugeordnete Primärübertragungsressource empfangen wird, und wobei die zumindest eine Sekundärübertragungsressource (18), die in einem früheren Zeitschlitz zugeordnet wurde, verfügbar ist, um als eine Primärübertragungsressource (28) für den späteren Zeitschlitz ausgewählt zu werden.

13. Verfahren zum Betreiben einer Basisstation zum Kommunizieren mit einer Mehrzahl von Nutzerausrüstungen, die der Basisstation zugeordnet sind, das folgende Schritte aufweist:

Empfangen (10), durch die Basisstation, von einer ersten einer Mehrzahl von Nutzerausrüstungen, einer oder mehrerer Identifikationen weiterer Basisstationen, die die erste Nutzerausrüstung in einer Übertragungsressource einer Mehrzahl von Übertragungsressourcen stören;
Empfangen, durch die Basisstation, von einer weiteren Basisstation, eines Primärressourcenindikators (14), der die Primärübertragungsressource für die weitere Basisstation anzeigt, in der eine weitere Nutzerausrüstung, die der weiteren Basisstation zugeordnet ist, eine Störung von der Basisstation erleiden würde; und
Zuordnen (16), durch die Basisstation, einer Sekundärübertragungsressource zu der zweiten Nutzerausrüstung von dem Satz verfügbarer Übertragungsressourcen, wobei der Satz verfügbarer Übertragungsressourcen die Primärübertragungsressource, die durch den Primärressourcenindikator angezeigt wird, nicht umfasst, **dadurch gekennzeichnet, dass** das Zuordnen (16) das Berechnen (200) eines Verfügbarkeitsmaßes für jede der Mehrzahl von Übertragungsressourcen umfasst, basierend auf einzelnen Empfangsqualitätsinformationen, die von der Nutzerausrüstung empfangen werden, die durch die Basisstation bedient wird, und Zuordnen der Sekundärübertragungsressource basierend auf dem Verfügbarkeitsmaß für die spezifische Übertragungsressource.

14. Computerprogramm, das eine Computerprogrammcodeeinrichtung umfasst, die angepasst ist, um das Verfahren gemäß Anspruch 13 durchzuführen, wenn dasselbe auf einem Prozessor läuft.

**Revendications**

1. Station de base destinée à communiquer avec une pluralité d'équipements d'utilisateur attribués à la station de base, comprenant:

un récepteur (10) adapté pour recevoir d'un premier parmi une pluralité d'équipements d'utilisateur une ou plusieurs identifications (12) d'autres stations de base interférant avec le premier équipement d'utilisateur dans une ressource de transmission parmi une pluralité de ressources de transmission, et adapté pour recevoir d'une autre station de base un indicateur de ressource primaire (14) indiquant la ressource de transmission primaire pour l'autre station de base, où un autre équipement d'utilisateur attribué à l'autre station de base subirait une interférence de la part de la station de base, et

un moyen d'attribution de ressources de transmission (16) adapté pour attribuer une ressource de transmission secondaire au deuxième équipement d'utilisateur parmi l'ensemble de ressources de transmission disponibles, où l'ensemble de ressources de transmission disponibles ne comporte pas la ressource de transmission primaire indiquée par l'indicateur de ressource primaire (14),

**caractérisée par le fait que** le moyen d'attribution de ressources de transmission (16) est adapté pour calculer (200) une mesure de disponibilité de chacune de la pluralité de ressources de transmission sur base des informations de qualité de réception individuelles reçues de l'équipement d'utilisateur desservi par la station de base et adapté pour attribuer la ressource de transmission secondaire sur base de la mesure de disponibilité de la ressource de transmission spécifique.

2. Station de base selon la revendication 1, dans laquelle le moyen d'attribution de ressource de transmission est adapté pour attribuer une ressource de transmission primaire au premier équipement d'utilisateur, la ressource de transmission primaire étant différente de la ressource de transmission primaire indiquée par l'indicateur de la ressource de transmission primaire,

dans laquelle la station de base comprend par ailleurs un émetteur adapté pour transmettre un indicateur de ressource de transmission primaire à une autre station de base, où l'autre station de base est une station de base provoquant une interférence dans la ressource de transmission primaire au premier équipement d'utilisateur déterminé par les une ou plusieurs identifications (12) reçues par le récepteur (10) du premier équipement d'utilisateur.

3. Station de base selon la revendication 1 ou 2, dans laquelle le récepteur est adapté pour recevoir des informations de qualité de réception (24) pour une pluralité de ressources de transmission différentes du deuxième équipement d'utilisateur,

dans laquelle le moyen d'attribution de ressources de transmission est adapté pour attribuer uniquement une ressource de transmission secondaire au deuxième équipement d'utilisateur pour laquelle le récepteur a reçu du deuxième équipement d'utilisateur une information de qualité de réception qui indique une qualité de réception supérieure à un seuil de qualité de réception prédéterminé.

4. Station de base selon l'une des revendications précédentes, dans laquelle le récepteur (10) est adapté pour recevoir les une ou plusieurs identifications et des informations de qualité de réception dans un premier intervalle de temps, et dans laquelle le moyen d'attribution de ressources de transmission est adapté pour attribuer sur base des informations reçues par le récepteur (10) dans un deuxième intervalle de temps ultérieur dans le temps au premier intervalle de temps.

5. Station de base selon la revendication 2, dans laquelle le récepteur (10) est adapté pour recevoir les une ou plusieurs identifications et les informations de qualité de réception dans un premier intervalle de temps, et dans laquelle l'émetteur est adapté pour transmettre l'indicateur de ressource de transmission primaire dans un deuxième intervalle de temps ultérieur dans le temps au premier intervalle de temps.

6. Station de base selon l'une des revendications précédentes, dans laquelle le moyen d'attribution de ressource de transmission (16) est configuré pour attribuer la ressource de transmission secondaire uniquement à un équipement d'utilisateur pour lequel une mesure de qualité de réception fournie par l'équipement d'utilisateur est supérieure à un seuil de mesure de qualité de réception prédéterminé.

7. Station de base selon l'une des revendications précédentes, dans laquelle le moyen d'attribution de ressources de transmission (16) est adapté pour attribuer autant de ressources de transmission secondaires que possible à la pluralité d'équipements d'utilisateur desservis par la station de base ou adapté pour attribuer uniquement un certain nombre de ressources de transmission limité par un nombre maximum prédéfini pouvant être attribué par les stations de base.

8. Station de base selon la revendication 1, dans laquelle le moyen d'attribution de ressource de transmission (16) est adapté pour exécuter la séquence d'étapes suivante:

déterminer (201) un nombre de ressources de transmission secondaires pouvant être attribuées en éliminant de l'ensemble de toutes les ressources de transmission les ressources de transmission présentant une disponibilité zéro, les ressources de transmission bloquées par un indicateur de ressource de transmission primaire reçu par le récepteur et la ressource de transmission primaire attribuée par la station de base, adaptée pour rechercher (202) une ressource de transmission présentant une disponibilité supérieure à une disponibilité minimale dans le nombre de ressources de transmission secondaires pouvant être attribuées, adaptée par ailleurs pour rechercher (203) une autre ressource de transmission pour le même équipement d'utilisateur ou au moins un autre équipement d'utilisateur desservi par la station de base, dans laquelle l'étape de recherche et l'autre étape de recherche sont répétées de manière itérative (204) jusqu'à ce que soient déterminées un nombre maximum de ressources de transmission secondaires pouvant être attribuées ou que soient déterminées toutes les ressources de transmission secondaires pouvant être attribuées, et adaptée pour attribuer (205) les ressources de transmission trouvées par l'étape de recherche et l'autre étape de recherche à au moins un équipement d'utilisateur desservi par la station de base comme ressource de transmission secondaire.

9. Station de base selon la revendication 1,
dans laquelle le moyen d'attribution de ressources de transmission (16) est adapté pour calculer une disponibilité d'une ressource de transmission spécifique en accumulant le nombre d'équipements d'utilisateur qui sont desservis par la station de base et qui signalent à la station base une information de qualité de réception qui indique la qualité de réception au-dessus d'un seuil prédéterminé pour la ressource de transmission spécifique.

10. Station de base selon l'une des revendications précédentes,
dans laquelle le moyen d'attribution de ressources de transmission (16) est adapté pour recevoir des instructions pour attribuer une ressource de transmission primaire par un contrôleur central, de sorte que la station de base attribue la ressource de transmission primaire à un équipement d'utilisateur desservi par la station de base, et dans laquelle l'attribution de ressource de transmission secondaire est effectuée par le moyen d'attribution de ressource de transmission de la station de base de manière répartie décentralisée.

11. Station de base selon l'une des revendications précédentes, dans laquelle le moyen d'attribution de ressources de transmission (10) est adapté pour exécuter une procédure répartie pour l'attribution de la ressource de transmission primaire (28) en attribuant uniquement une ressource de transmission primaire non bloquée par un indicateur de ressource de transmission primaire (14) d'une autre station de base reçu par le récepteur (10), et en sélectionnant une ressource de transmission présentant une mesure de disponibilité supérieure à une mesure de disponibilité minimale des ressources de transmission pouvant être attribuées.

12. Station de base selon l'une des revendications précédentes, dans laquelle le moyen d'attribution de ressource de transmission (16) est adapté pour réattribuer une ressource de transmission primaire pour un intervalle de temps ultérieur en cas de réception d'un indicateur de ressource primaire (14) pour la ressource de transmission primaire attribuée, et dans laquelle l'au moins une ressource de transmission secondaire (18) attribuée dans un intervalle de temps antérieur est disponible pour être sélectionnée comme ressource de transmission primaire (28) pour l'intervalle de temps ultérieur.

13. Procédé pour faire fonctionner une station de base pour communiquer avec une pluralité d'équipements d'utilisateur attribués à la station de base, comprenant le fait de:

recevoir (10), par la station de base, d'un premier parmi une pluralité d'équipements d'utilisateur une ou plusieurs identifications d'autres stations de base interférant avec le premier équipement d'utilisateur dans une ressource de transmission parmi une pluralité de ressources de transmission;
recevoir, par la station de base, d'une autre station de base un indicateur de ressource primaire indiquant la ressource de transmission primaire pour l'autre station de base où un autre équipement d'utilisateur attribué à l'autre station de base subirait une interférence de part de la station de base; et
attribuer (16), par la station de base, une ressource de transmission secondaire au deuxième équipement d'utilisateur parmi l'ensemble de ressources de transmission disponibles, où l'ensemble de ressources de transmission disponibles ne comporte pas la ressource de transmission primaire indiquée par l'indicateur de la ressource primaire,
**caractérisé par le fait que** l'attribution (16) comprend le fait de calculer (200) une mesure de disponibilité pour chacune de la pluralité de ressources de transmission sur base d'informations de qualité de réception individuelles reçues de l'équipement d'utilisateur desservi par la station de base et d'attribuer la ressource de transmission secondaire sur base de la mesure de disponibilité de la ressource de transmission spécifique.

14. Programme d'ordinateur comprenant un moyen de code de programme d'ordinateur adapté pour réaliser, lorsqu'il est exécuté sur un processeur, le procédé selon la revendication 13.

BASE STATION ①

SINR for
Tx resources

ID of
interfering
base stations
from 1st UE

24

10

12

receiver

primary resource indicator
from other bar station

14

instr. from
central controller

26

16

transmission
resource
allocater

28

primary transmission resource
to the 1st UE

secondary transmission
resource to the 2nd UE

18

20

transmitter
(time slot-wise
processing)

22

primary resource
indicator to further base station

FIG 1

- ID of interfering base station
  SINR of all subbands
- PRI from serving base station
  of victim UE

FIG 2

FIG 3A

FIG 3B

→ potential interference path 300

FIG 3C

EP 2 538 741 B1

FIG 4

27

- - - → potential
  interference path 300
- - - - PPC indicator 305

FIG 5

FIG 6A

FIG 6B

# At time o

- each BS assigns one CC randomly

## FIG 7A

# Time slot-1

- **UEs make measurement:**
  - Identify IDs of interfering BSs
  - Calculate SINR levels of each CC

FIG 7B

# CC Assignment at BS

time slot-1 | time slot-2 | time slot-3

0 → time

- **BS receives feedbacks of time slot-1**
  - identifies available CCs according to SINR levels
  - updates PCC assignment
  - assigns SCC if possible

- - -→ potential interference path

——→ feedback from UE

A 　3　 ⇒ 1 2 3

B 　2　 ⇒ 2

C 　3　 ⇒ 1 2 3

## FIG 7C

# Time slot-2

- each BS sends PCC indicator to the interfering BSs

- - -> potential interference path
- - - - PPC indicator

**FIG 7D**

# CC Assignment at BS

| time slot-1 | time slot-2 | time slot-3 |

0 → time

- A BS cannot use the CCs stated in the received PCC indicator
  - **banned CCs**

from B        from A

A

B

from A    from B

C

- - -→ potential interference path

——→ feedback from UE

- - - PPC indicator

A  1 2 3  ⇒  1 X 3

B    2    ⇒  X 2

C  1 2 3  ⇒  X X 3

## FIG 7E

# Time slot-3

- after 3-4 iterations, a system reaches a stable resource allocation
- a greedy resource allocation, restricted by the neighbors

- - -> potential interference path

## FIG 7F

- LTE-A femtocell network
- 5x5 grid
- activation rate= 0.2
- 4 CCs
- 4 UEs per BS
- Reuse-2 and Reuse-4 are central approaches

## FIG 8A

FIG 8B

CDF of SINR

CDFs of SINR and user capacity

FIG 8C

CDF of user capacity

FIG 8D

1: $A_n = 0$
2: **if** $n$ is not banned by neighbor BSs **then**
3:    **for** m $\in$ M **do**
4:       **if** $\gamma_{m,n} \geq \gamma_{th}$ **then**
5:          $A_n = A_n - 1$
6:       **end if**
7:    **end for**
8: **end if**

# FIG 9A
## (AVAILABILITY)

1: Calculate the availability of subband
2: $S = S - \{s \in S \,|\, A_s = 0\}$
3: $N' = N - (P + S)$
4: CALCULATE minAvail
5: **while** max $(A_{N'}) >$ minAvail **do**
6:    $n. = \arg\max \{ A_n \}$
        $n \in N'$
7:    $N' = N' - n$
8:    with a probability $\mu (n)$ $\Rightarrow$ UPDATE $S$
9:    CALCULATE minAvail
10: **end while**

# FIG 9B
## (SECONDARY ASSIGNMENT)

1: calculate the availability of subbands
2: **while** max $(A_{N'}) > A_p$ **do**
3:    $n = \arg\max (A_n)$
        $n \in N'$
4:    $N' = N' - n$
5:    with a probability $\mu (n)$ $\Rightarrow$ UPDATE $P$
6: **end while**

# FIG 9C
## (PRIMARY ASSIGNMENT)

Calculate availability
for each subband (CC)

~200

Determine a number of allocatable
secondary transmission resources
by removing

- subbands with zero availability
- PRI-blocked subbands
- PR allocated by base station

~201

Search for transmission resource
having higher availability

~202
iteration

~204

Further search for a further
transmission resource

~203

When iteration termination
criterion is fulfilled,
allocate secondary transmission resource

~205

FIG 10

**REFERENCES CITED IN THE DESCRIPTION**

**Patent documents cited in the description**

- WO 2011041982 A1

**Non-patent literature cited in the description**

- **H. CLAUSSEN.** Performance of Macro-and Co-Channel Femtocells in a Hierarchical Cell Structure. *Proc. of the 18th IEEE (International Symposium on Personal, Indoor and Mobile Radio Communications (PIMRC), Athens, Greece,* 03 September 2007, 1-5
- **Z. BHARUCHA ; H. HAAS ; A. SAUL ; G. AUER.** Throughput Enhancement through Femto-Cell Deployment. *European Transactions on Telecommunications,* 31 March 2010, vol. 21 (4), 469-477
- **V. CHANDRASEKHAR ; J. ANDREWS ; A. GATHERER.** Femtocell Networks: A Survey. *IEEE Communications Magazine,* 2008, vol. 46 (9), 59-67
- **Y.-Y. LI ; M. MACUHA ; E. SOUSA ; T. SATO ; M. NANRI.** Cognitive Interference Management in 3G Femtocell. *Proc. of the IEEE Personal, Indoor and Mobile Radio Communications (PIMRC,* 13 September 2009, 1118-1122
- **J. LING ; D. CHIZHIK ; R. VALENZUELA.** On Resource Allocation in Dense Femto-Deployments. *Proc. of the IEEE International Conference on Microwaves, Communications, Antennas and Electronics Systems (COMCAS,* 09 November 2009, 1-6
- **J. ELLENBECK ; C. HARTMANN ; L. BERLEMANN.** Decentralized Inter-Cell Interference Coordination by Autonomous Spectral Reuse Decisions. *Proc. of the 14th European Wireless Conference (EW,* 22 June 2008, 1-7
- **C. LEE ; J.-H. HUANG ; L.-C. WANG.** Distributed Channel Selection Principles for Femtocells with Two-Tier Interference. *Proc. of the 71st IEEE Vehicular Technology Conference (VTC,* 16 May 2010, 1-5
- **X. CHU ; Y. WU ; L. BENMESBAH ; W.-K. LING.** Resource Allocation in Hybrid Macro/Femto Networks. *Proc. of IEEE Wireless Communications and Networking Conference Workshops (WCNCW,* April 2010, 1-5
- **L. GARCIA ; K. PEDERSEN ; P. MOGENSEN.** Autonomous Component Carrier Selection for Local Area Uncoordinated Deployment of LTE-Advanced. *Proc. of IEEE Vehicular Technology Conference Fall (VTC 2009-Fall,* 2009, 1-5

- Autonomous component carrier selection: Interference management in local area environments for LTE-advanced. *IEEE Communications Magazine,* 2009, vol. 47 (9), 110-116
- **L. ZHANG ; L. YANG ; T. YANG.** Cognitive Interference Management for LTE-A Femtocells with Distributed Carrier Selection. *Proc. of IEEE Vehicular Technology Conference Fall (VTC 2010-Fall,* 2010, 6-9
- **D. LOPEZ-PÉREZ ; G. DE LA ROCHE ; A. VALCARCE ; A. JÜTTNER ; J. ZHANG.** Interference Avoidance and Dynamic Frequency Planning for WiMAX Femtocells Networks. *Proc. of the 11th IEEE International Conference on Communication Systems (ICCS,* 19 November 2008, 1579-1584
- **R. CHANG ; Z. TAO ; J. ZHANG ; C. C. KUO.** A Graph Approach to Dynamic Fractional Frequency Planning for Networks. *Proc. of the IEEE International Conference on Communications (ICC,* 14 June 2009
- **M.C. NECKER.** Integrated scheduling and interference coordination in cellular OFDMA networks. *Proc. of the Fourth International Conference on Broadband Communications, Networks and Systems (BROADNETS,* 10 September 2007, 559-566
- **H. LI ; X. XU ; D. HU ; X. QU ; X. TAO ; P. ZHANG.** Graph Method Based Clustering Strategy for Femtocell Interference Management and Spectrum Efficiency Improvement. *Proc. of 6th International Conference on Wireless Communication Networking and Mobile Computing (WiCOM,* 2010, 1-5
- **M.C. NECKER.** A Graph-Based Scheme for Distributed Interference Coordination in Cellular OFDM Networks. *Proc. of the IEEE Vehicular Technology Conference (VTC,* 11 May 2008, 713-718
- **S. UYGUNGELEN ; G. AUER ; Z. BHARUCHA.** Graph-Based Dynamic Frequency Reuse in Femtocell Networks. *Proc. of IEEE Vehicular Technology (VTC,* May 2011
- Requirements for Further Advancements for Evolved Universal Terrestrial Radio Access (E-UTRA) (LTE-Advanced. *3GPP, TR 36.913,* December 2009

- Requirements for Evolved UTRA (E-UTRA) and Evolved UTRAN (E-UTRAN. *3GPP TS 25.913 V 8.0.0,* December 2008, www.3gpp.org/ftp/Specs/.
- **M. IWAMURA ; K. ETEMAD ; M: FONG; ; R. NORY ; R. LOVE.** Carrier Aggregation Framework in 3GPP LT-Advanced. *IEEE Communications Magazine,* August 2010, vol. 48 (8), 60-67
- **S. ABETA.** Toward LTE commercial launch and future plan for LTE enhancements (LTE-Advanced. *Proc. of IEEE International Conference on Communication Systems (ICCS,* 2010, 146-150
- Simulation Assumptions and Parameters for FDD HeNB RF Requirements. *3GPP TSG RAN WG4-092042,* May 2009, www.3gpp.org/ftp/Specs
- Evolved Universal Terrestrial Radio Access (E-UTRA): Radio Frequency (RF) System Scenarios. *3GPP TR 36.942,* June 2010, www.3gpp.org/ftp/Specs
- **A. PERSSON ; T. OTTOSSON ; A. SAUL ; G. AUER ; M. AFGANI.** On the Performance of Inter-Sector Scheduling in OFDMA Systems. *FREQUENZ Journal of RF-Engineering and Telecommunications,* January 2007, vol. 61, 47-50